(19) Europäisches Patentamt
European Patent Office
Office européen des brevets

(11) **EP 4 116 231 A1**

(12) **EUROPEAN PATENT APPLICATION**

(43) Date of publication:
**11.01.2023 Bulletin 2023/02**

(21) Application number: **22169954.9**

(22) Date of filing: **15.12.2011**

(51) International Patent Classification (IPC):
**B65G 1/04** (2006.01)          **B60B 33/02** (2006.01)
**B62D 11/02** (2006.01)

(52) Cooperative Patent Classification (CPC):
**B65G 1/0492; B60B 33/025; B60B 33/026**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.12.2010 US 42335910 P
15.12.2010 US 42340910 P
15.12.2010 US 42331710 P**

(62) Document number(s) of the earlier application(s) in
accordance with Art. 76 EPC:
**16164914.0 / 3 115 320
11804880.0 / 2 651 787**

(71) Applicant: **SYMBOTIC, LLC
Wilmington, MA 01887 (US)**

(72) Inventors:
• **TOEBES, Stephen
Chelmsford, MA, 01824 (US)**
• **SULLIVAN, Robert
Wilmington, MA, 01887 (US)**
• **BUZAN, Forrest
Dunstable, MA, 01827 (US)**
• **HOLWELL, Justin
STERLING, MA, 01561 (US)**
• **ECCLES, Andrew
CAMBRIDGE, MA, 02138 (US)**

(74) Representative: **Ipside
7-9 Allées Haussmann
33300 Bordeaux Cedex (FR)**

Remarks:
This application was filed on 26.04.2022 as a
divisional application to the application mentioned
under INID code 62.

(54) **AUTONOMOUS TRANSPORT VEHICLE**

(57)     An autonomous transport vehicle (110) for transporting items in a storage and retrieval system, the autonomous transport vehicle comprising: a frame (110FR); a controller (1220); at least two independently driven drive wheels (1211, 1212) mounted to the frame; and at least one caster wheel (1261, 1262) mounted to the frame and having a releasably lockable swivel lock, the controller being configured to lock and unlock the releasably lockable swivel lock during a transport of items through the storage and retrieval system based on a predetermined kinematic state of the autonomous transport vehicle.

FIG.4D

## Description

CROSS-REFERENCE TO RELATED APPLICATIONS

This application is a non-provisional of and claims the benefit of United States Patent Application 13/326,423 filed on December 15, 2011 which further claims priority to United States provisional patent application serial number 61/423,409 filed on December 15, 2010, United States Patent Application 13/326,447 filed on December 15, 2011 which further claims priority to United States provisional patent application serial number 61/423,359 filed on December 15, 2010, and United States Patent Application 13/326,505 filed on December 15, 2011 which further claims priority to United States provisional patent application serial number 61/423,317 filed on December 15, 2010, the disclosures of which are incorporated herein by reference in their entireties.

BACKGROUND

1. Field

The embodiments generally relate to storage and retrieval systems and, more particularly, to autonomous transports of the storage and retrieval systems.

2. Brief Description of Related Developments

Warehouses for storing case units may generally comprise a series of storage racks that are accessible by transport devices such as, for example, fork lifts, carts and elevators that are movable within aisles between or along the storage racks or by other lifting and transporting devices. These transport devices may be automated or manually driven. Generally the items transported to/from and stored on the storage racks are contained in carriers, for example storage containers such as trays, totes or shipping cases, or on pallets. Further, the surfaces over which the transport devices operate may have uneven surfaces.

It would be advantageous for the automated transport vehicle to transition between a physically unrestrained guide system and a physically constrained guide system for transporting case units within the storage and retrieval system. Further, when transporting the cases to and from the storage racks with automated transports it would be advantageous to keep the wheels of the automated transports in substantial contact with the surfaces of the travel decks. In addition, when transporting the cases to and from the storage racks with automated transports it would be advantageous to be able to transport the cases at high speeds using autonomous transport vehicles.

BRIEF DESCRIPTION OF THE DRAWINGS

The foregoing aspects and other features of the disclosed embodiments are explained in the following description, taken in connection with the accompanying drawings, wherein:

Fig. 1 schematically illustrates an exemplary storage and retrieval system in accordance with the embodiments;

Fig. 2 illustrates a schematic plan view of an exemplary storage and retrieval system in accordance with the embodiments;

Fig. 3 is a schematic illustration of a portion of the storage and retrieval system of Fig. 1 in accordance with the embodiments;

Fig. 4A-4E illustrates a schematic illustration of an autonomous transport vehicle in accordance with the embodiments;

Figs. 5A-5E illustrate storage shelves and an exemplary autonomous transport vehicle in accordance with the embodiments;

Fig. 6 is a schematic illustration of a portion of the storage and retrieval system in accordance with the embodiments;

Figs 6A-6C are flow diagrams in accordance with aspects of the embodiments;

Fig. 7 is an schematic illustration of a portion of the autonomous transport vehicle of Figs. 4A-4E in accordance with the embodiments;

Fig. 8 is an schematic illustration of a portion of the autonomous transport vehicle of Figs. 4A-4E in accordance with the embodiments;

Figs. 9A and 9B are schematic illustrations of the autonomous transport vehicle of Figs. 4A-4E in accordance with the embodiments;

Figs. 10A, 10B, 10C and 10D are schematic illustrations of a portion of the autonomous transport vehicle of Figs. 4A-4E in accordance with the embodiments;

Figs. 11A and 11B are schematic illustrations of a portion the exemplary autonomous transport vehicle of Figs. 4A-4E in accordance with the embodiments;

Figs. 12A and 12B are exemplary illustrations of portions of the autonomous transport vehicle of Fig. 4A-4E in accordance with the embodiments;

Fig. 13 is a schematic illustration of a portion of the storage and retrieval system of Fig. 1 in accordance with the embodiments;

Figs. 14A and 14B are exemplary schematic force diagrams of forces applied to the autonomous transport vehicle of Fig. 4A-4E in accordance with the embodiments;

Fig. 15 is a schematic illustration of an autonomous transport vehicle within a picking aisle of the storage and retrieval system of Fig. 1 in accordance with the embodiments; and

Figs. 16A and 16B are exemplary schematic force diagrams of forces applied to the autonomous transport vehicle of Fig. 4A-4E in accordance with the embodiments.

DETAILED DESCRIPTION OF THE EXEMPLARY EMBODIMENT(s)

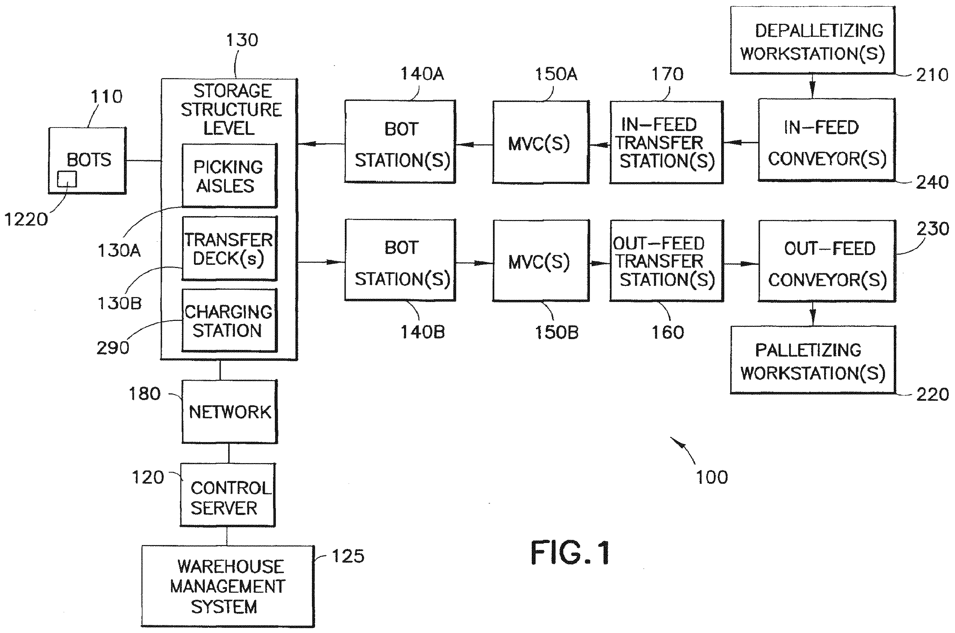

Fig. 1 schematically illustrates an exemplary storage and retrieval system 100 in accordance with the embodiments. Although the disclosed embodiments will be described with reference to the embodiments shown in the drawings, it should be understood that the disclosed embodiments can be embodied in many alternate forms. In addition, any suitable size, shape or type of elements or materials could be used.

In accordance with the embodiments the storage and retrieval system 100 may operate in a retail distribution center or warehouse to, for example, fulfill orders received from retail stores for case units (where case units as used herein means items not stored in trays, on totes or on pallets, e.g. uncontained or items stored in trays, totes or on pallets) . It is noted that the case units may include cases of items (e.g. case of soup cans, boxes of cereal, etc.) or individual items that are adapted to be taken off of or placed on a pallet. In accordance with the embodiments, shipping cases or case units (e.g. cartons, barrels, boxes, crates, jugs, totes, pallets or any other suitable device for holding case units) may have variable sizes and may be used to hold items in shipping and may be configured so they are capable of being palletized for shipping. It is noted that when, for example, bundles or pallets of case units arrive at the storage and retrieval system the content of each pallet may be uniform (e.g. each pallet holds a predetermined number of the same item - one pallet holds soup and another pallet holds cereal) and as pallets leave the storage and retrieval system the pallets may contain any suitable number and combination of different items (e.g. each pallet may hold different types of items - a pallet holds a combination of soup and cereal). It should be understood that the storage and retrieval system described herein may be applied to any environment in which case units are stored and retrieved.

The storage and retrieval system 100 may be configured for installation in, for example, existing warehouse structures or adapted to new warehouse structures. In the embodiments, the storage and retrieval system may include in-feed and out-feed transfer stations 170, 160, multilevel vertical conveyors 150A, 150B, autonomous transport vehicle or robot (referred to herein as "bots") stations 140A, 140B, a storage structure 130, and a number of bots 110. Suitable examples of storage and retrieval systems may be found in United States Patent Application Number 12/757,220, entitled "STORAGE AND RETRIEVAL SYSTEM" and filed on April 9, 2010 and United States Patent Application Number 12/757,381, entitled "STORAGE AND RETRIEVAL SYSTEM" and filed on April 9, 2010, and United States Provisional Patent Application entitled "WAREHOUSING SCALABLE STORAGE STRUCTURE" with Attorney Docket Number 1127P014551-US(-#1) (Ser. No. 61/423,340) and filed on December 15, 2010 (now Attorney Docket Number 1127P014551-US (PAR) with US Ser. No. 13/326,674 filed on December 15, 2011), the disclosures of which are incorporated by reference herein in their entireties. The in-feed transfer stations 170 and out-feed transfer stations 160 may operate together with their respective multilevel vertical conveyors 150A, 150B for bi-directionally transferring case units to and from one or more vertically stacked levels of the storage structure 130. It is noted that while the multilevel vertical conveyors 150 are described herein as being dedicated inbound or in-feed conveyors 150A and outbound or out-feed conveyors 150B, each of the conveyors 150A, 150B may be used for both inbound and outbound transfer of case units/items from the storage and retrieval system. The multilevel vertical conveyors 150 may be any suitable lifting devices for transporting case units between levels of the storage and retrieval system. Some non-limiting suitable examples of multilevel vertical conveyors can be found in, for example, United States Provisional Patent Application entitled "LIFT INTERFACE FOR STORAGE AND RETRIEVAL SYSTEMS" with Attorney Docket Number 1127P014525-US (PAR) and filed on December 15, 2010, and United States Patent Application Number 12/757,354, entitled "LIFT INTERFACE FOR STORAGE AND RETRIEVAL SYSTEMS" and filed on April 9, 2010 (the disclosures of which are incorporated by reference herein in their entireties) and United States Patent Application Number 12/757,220, entitled "STORAGE AND RETRIEVAL SYSTEM," (previously incorporated by reference). For example, the multilevel vertical conveyors 150A, 150B may have any suitable number of support shelves for transporting the case units to a predetermined level of the storage and retrieval system 100. It is noted that while multilevel vertical conveyors are described herein in other aspects the conveyors may be any suitable conveyors or transfer/picking devices having any suitable transport path orientation. In the embodiments transfer of case units between the bots 110 and the multilevel vertical conveyors may occur in any suitable manner through any suitable interface between the bots 110 and the conveyors. Case units may also be indirectly transferred between the bots 110 and the multilevel vertical conveyors 150A, 150B as described in, for example, United States Patent Application Number 12/757,220, entitled "STORAGE AND RETRIEVAL SYSTEM," (previously incorporated by reference). It is noted that the transfer of case units between the bots 110 and multilevel vertical conveyors may occur in any suitable manner.

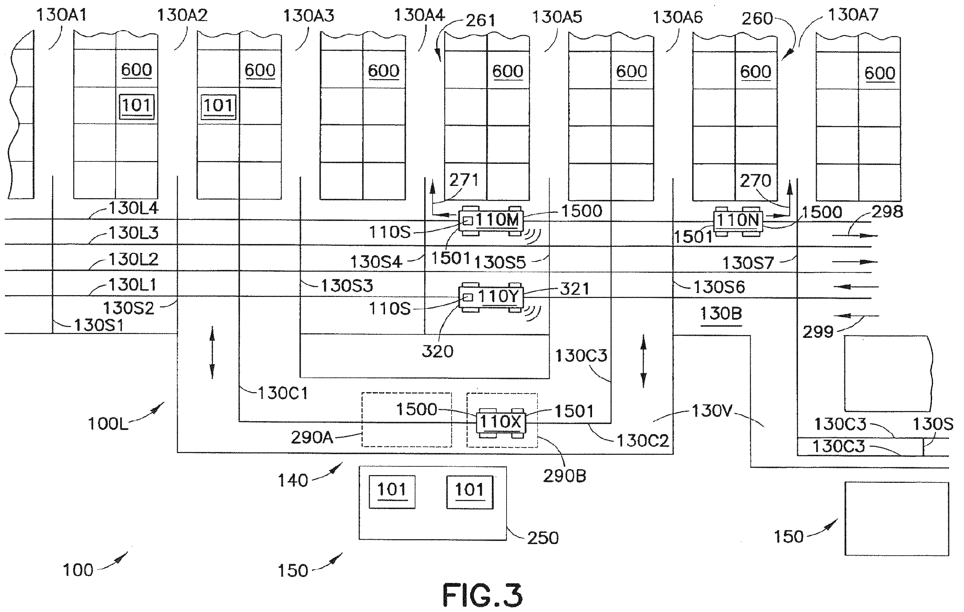

As may be realized, the storage and retrieval system 100 may include multiple in-feed and out-feed multilevel vertical conveyors 150A, 150B that are accessible by, for example, bots 110 on each of the stacked levels of the storage and retrieval system 100 so that one or more case unit(s) can be transferred from a multilevel vertical conveyor 150A, 150B to each storage space on a respective level and from each storage space to any one of the multilevel vertical conveyors 150A, 150B on a respective level. The bots 110 may be configured to transfer the case units between the storage spaces on storage racks 600 (Fig. 3) and the multilevel vertical conveyors with one pick (e.g. substantially directly between the storage spaces and the multilevel vertical conveyors). By way of further example, the designated bot 110 picks the case unit(s) from a shelf of a multilevel vertical conveyor, transports the case unit(s) to a predetermined storage area of the storage structure 130 and places the case unit(s) in the predetermined storage area (and vice versa).

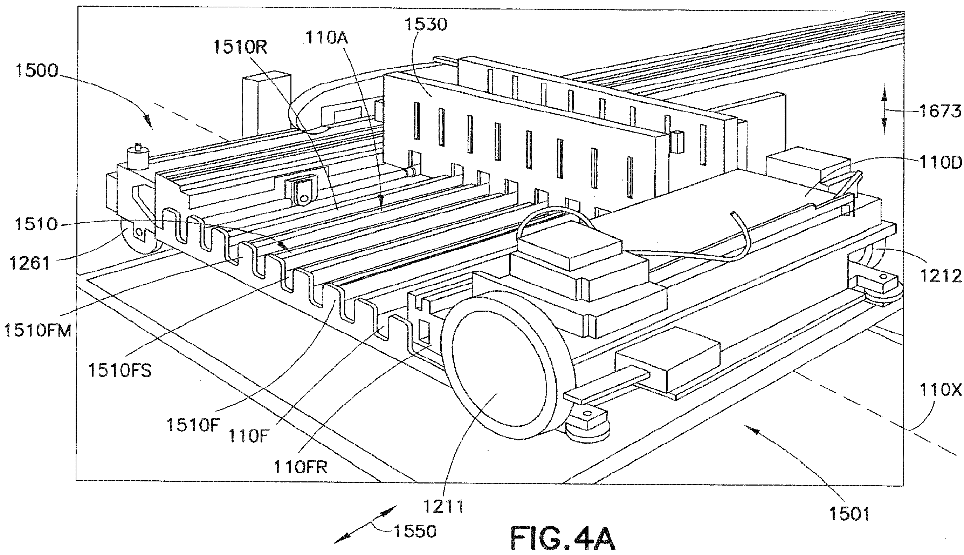

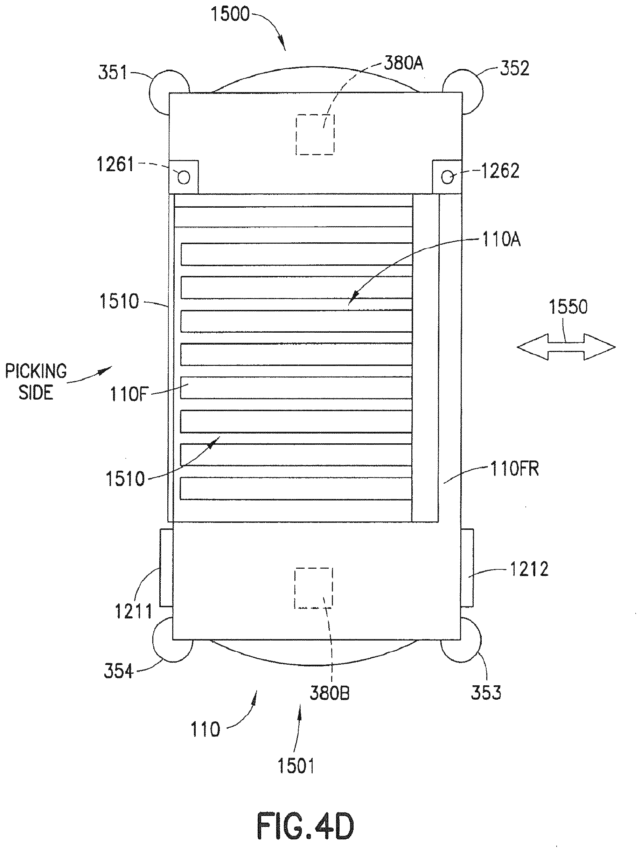

The bots 110 may be configured to place case units, such as the above described retail merchandise, into picking stock in the one or more levels of the storage structure 130 and then selectively retrieve ordered items for shipping the ordered items to, for example, a store or other suitable location. As described above, in the embodiments, the bots 110 may interface in any suitable manner with the multilevel vertical conveyors 150A, 150B such as through, for example, extension of a transfer arm 110A (Figs. 4A-4E) of the bot relative to a frame of the bot. The bot may also interface with the multilevel vertical conveyors indirectly in any other suitable manner. Suitable examples of bots are described in United States Patent Application Number 12/757,312, entitled "AUTONOMOUS TRANSPORTS FOR STORAGE AND RETRIEVAL SYSTEMS" and filed on April 9, 2010, United States Provisional Patent Application entitled "BOT PAYLOAD ALIGNMENT AND SENSING" with Attorney Docket Number 1127P014263-US (-#1) (Ser. No. 61/423,220) and filed on December 15, 2010 (now Attorney Docket Number 1127P014263-US (PAR) with US Ser. No. 13/327,040 filed on December 15, 2011), United States Provisional Patent Application entitled "AUTOMATED BOT WITH TRANSFER ARM" with Attorney Docket Number 1127P014264-US (-#1) (Ser. No. 61/423,365) and filed on December 15, 2010 (now Attorney Docket Number 1127P014264-US (PAR) with US Ser. No. 13/326,952 filed on December 15, 2011), United States Provisional Patent Application entitled "AUTOMATED BOT TRANSFER ARM DRIVE SYSTEM" with Attorney Docket Number 1127P014265-US (-#1) (Ser. No. 61/423,388) and filed on December 15, 2010 (now Attorney Docket Number 1127P014265-US (PAR) with US Ser. No. 13/326,993 filed on December 15, 2011), United States Provisional Patent Application entitled "BOT HAVING HIGH SPEED STABILITY" with Attorney Docket Number 1127P014266-US (-#1) (Ser. No. 61/423,359) and filed on December 15, 2010 (now Attorney Docket Number 1127P014265-US (PAR) with US Ser. No. 13/326,993 filed on December 15, 2011), and United States Provisional Patent Application entitled "BOT POSITION SENSING" with Attorney Docket Number 1127P014267-US (-#1) (Ser. No. 61/423,206) and filed on December 15, 2010 (now Attorney Docket Number 1127P014267-US (PAR) with US Ser. No. 13/327,035 filed on December 15, 2011), the disclosures of which are incorporated by reference herein in their entireties.

The storage structure 130 may include multiple levels of storage rack modules 600 (Fig. 3) where each level includes an array of storage spaces (arrayed on the multiple levels and in multiple rows on each level), picking aisles 130A formed between the rows of storage spaces, and transfer decks 130B. In the embodiments, the picking aisles 130A and transfer decks 130B may be arranged for allowing the bots 110 to traverse respective levels of the storage structure 130 for placing case units into picking stock and to retrieve the ordered case units. As may be realized, the storage and retrieval system may be configured to allow random accessibility to the storage spaces. For example, all storage spaces in the storage structure 130 may be treated substantially equally when determining which storage spaces are to be used when picking and placing case units from/to the storage structure 130 such that any storage space of sufficient size can be used to store items. The storage structure 130 of the exemplary embodiments may also be arranged such that there is no vertical or horizontal array partitioning of the storage structure. For example, each multilevel vertical conveyor 150A, 150B may be common to all storage spaces (e.g. the array of storage spaces) in the storage structure 130 such that any bot 110 can access each storage space and any multilevel vertical conveyor 150A, 150B can receive case units from any storage space on any level so that the multiple levels in the array of storage spaces substantially act as a single level (e.g. no vertical partitioning). The multilevel vertical conveyors 150A, 150B can also receive case units from any storage space on any level of the storage structure 130 (e.g. no horizontal partitioning). It is noted that the storage and retrieval system may also be configured so that each multilevel vertical conveyor serves a predetermined area of the array of storage spaces. Suitable exemplary configurations of storage and retrieval systems can be found in, for example, United States Patent Application Number 12/757,381, entitled "STORAGE AND RETRIEVAL SYSTEM" and filed on April 9, 2010, the disclosure of which is incorporated by reference herein in its entirety.

The storage structure 130 may also include charging stations 290 for replenishing, for example, an electricity storage device of the bots 110 as described in, United States Provisional Patent Application entitled "AUTONOMOUS TRANSPORT VEHICLE CHARGING SYSTEM" having Attorney Docket Number 1127P014517-US (-#1) (Ser. No. 61/423,402) and filed on December 15, 2010 (now Attorney Docket Number 1127P014517-US (PAR) with US Ser. No. 13/326,823 filed on December 15, 2011), the disclosures of which are incorporated by reference herein in their entireties. For example, the charging stations 290 may be located at, for example, transfer areas of the bot stations 140 (Fig. 3) of the transfer deck 130B so that the bots 110 can substantially simultaneously transfer items, for example, to and from a multilevel vertical conveyor 150A, 150B while being charged.

The bots 110 and other suitable features of the storage and retrieval system 100 may be controlled by, for example, one or more central system control computers (e.g. control server) 120 through, for example, any suitable network 180. The network 180 may be a wired network, a wireless network or a combination of a wireless and wired network using any suitable type and/or number of communication protocols. It is noted that, in the embodiments, the system control server 120 may be configured to manage and coordinate the overall operation of the storage and retrieval system 100 and interface with, for example, a warehouse management system 125, which in turn manages the warehouse facility as a whole. The control server 120 may be substantially similar to that described in, for example, United States Patent Application Number 12/757,337, entitled "CONTROL SYSTEM FOR STORAGE AND RETRIEVAL SYSTEMS" and filed on April 9, 2010, the disclosure of which is incorporated by reference herein in its entirety.

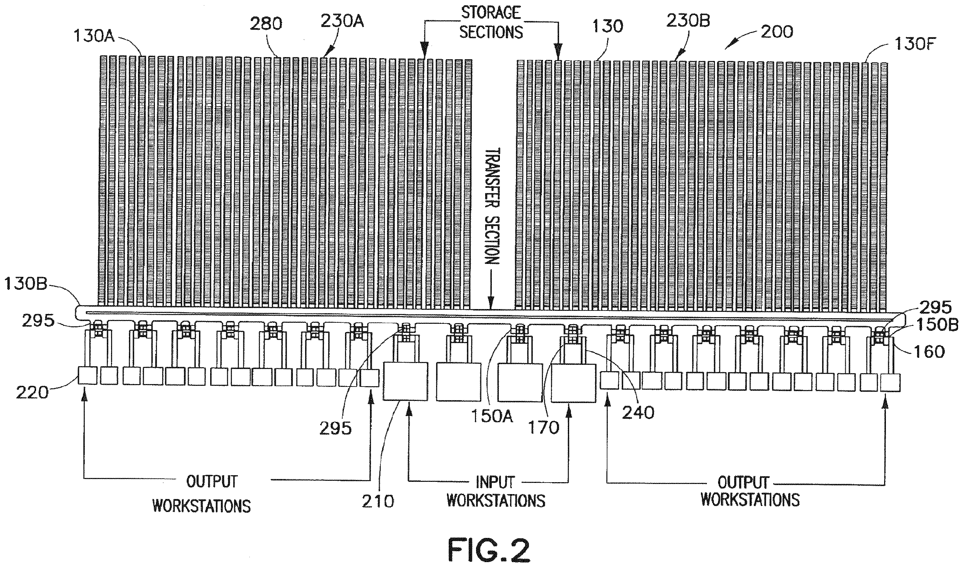

Referring also to Fig. 2, an exemplary configuration of the storage and retrieval system 100 is shown. Other suitable exemplary configurations of storage and retrieval systems can be found in, for example, United States Patent Application Number 12/757,381, entitled "STORAGE AND RETRIEVAL SYSTEM" and filed on April 9, 2010, and United States Provisional Patent Application entitled "WAREHOUSING SCALABLE STORAGE STRUCTURE" with Attorney Docket Number 1127P014551-US(-#1) (Ser. No. 61/423,340) and filed on December 15, 2010 (now Attorney Docket Number 1127P014551-US(PAR) with United States Patent Application number 13/326,674 filed December 15, 2011), the disclosures of which are incorporated by reference herein in their entireties. It should be understood that in the embodiments the storage and retrieval system may have any suitable configuration. As can be seen in Fig. 2, the storage and retrieval system 200 is configured, for exemplary purposes only, as a single-ended picking structure in which only one side of the system 200 has a transfer section or deck 130B. The single-ended picking structure may be used in, for example, a building or other structure having loading docks disposed only on one side of the building. In this example, the storage and retrieval system 200 includes transfer deck(s) 130B and picking aisles 130A that allow bots 110 to traverse an entirety of a level of the storage structure 130 on which that bot 110 is located for transporting items between any suitable storage locations/picking aisles 130A and any suitable multilevel vertical conveyors 150A, 150B. The multilevel vertical conveyors 150A, 150B provide transport of case units into the storage and retrieval system 200 through input workstations 210 and provide output of case units from the storage and retrieval system 200 through output workstations 220. In the embodiments, the storage and retrieval system 200 includes a first and second storage section 230A, 230B located side by side so that the picking aisles of each section are substantially parallel with each other and facing the same direction (e.g. towards transfer deck 130B). However, in the embodiments the storage and retrieval system may have any suitable number of storage sections arranged relative to each other in any suitable configuration.

Referring now to Fig. 3, a portion of one level 100L of the storage and retrieval system 100 is shown. As may be realized substantially similar levels may be located above and/or below level 100L to form an array of vertically stacked storage levels as described above. In the embodiments each level 100L may have a transfer deck 130B and one or more picking aisles 130A1-130A7. Storage racks 600 may be disposed on either side of each picking aisle 130A1-130A7 so that case units 101 may be stored on both sides of each picking aisle.

The transfer deck 130B may be configured to allow generally physically unrestrained travel of the bots 110 while on the transfer deck 130B. For example, the transfer deck 130B may have any suitable number of travel guide lines 130L1-130L4 and any suitable number of shunt or bypass guide lines 130S1-130S7 that form one or more travel paths or lanes for the bots 110 to traverse. For example, guide lines 130L1, 130L2 allow travel in a first direction and guide lines 130L3, 130L4 allow travel in a second direction substantially opposite the first direction. It is noted that while the direction of travel along a respective guide line 130L1-130L4 is generally in a single direction, the guide lines, in combination with for example suitable bot traffic management, may allow for limited bidirectional travel of the bots 110 along the guide lines 130L1-130L4 as described below. In the embodiments bot traffic may be managed through, for example, bot-to-bot communications and/or traffic may be managed by bot location tracking and management through, for example, control server 120 or other suitable controller of the storage and retrieval system. A suitable example, of bot traffic management may be found in, for example, United States Patent Application Number 12/257,337 entitled "CONTROL SYSTEM FOR STORAGE AND RETRIEVAL SYSTEMS" and filed on April 9, 2010, the disclosure of which is incorporated by reference herein in its entirety.

Shunt guide lines 130A1-130S7 may also be arranged on the transfer deck transverse to the guide lines 130L1-130L4 for allowing the bots 110 to bi-directionally switch between guide lines 130L1-130L4 and enter the picking aisles 130A1-130A7. The shunt guide lines 130S1-130S7 are oriented substantially transverse to the travel guide lines 130L1-130L4. The shunt guide lines 130S1-130S7 may allow bots access to, for example, the picking aisles 130A or the bot stations 140 without traversing an entire length of the travel guide lines 130L1-130L4. In the embodiments, the shunt guide lines may be aligned with the picking aisles 130A1-130A7 or any other suitable ingress or egress location of the storage and retrieval system allowing the bot to turn down a corresponding picking aisle while travelling along any one of the travel guide lines 130L1-130L4. It is noted that the shunt guide lines 130S1-130S7 may also be located at ends of the transfer deck 130B or at any other suitable locations of the transfer deck 130B. The shunt guide lines 130A1-130S7 may also be used to track a position of the bot 110 through the storage and retrieval system structure and monitor travel along the travel guide lines 130L1-130L4. For example, the position of the shunt guide lines 130A1-130S7 may be recorded in a memory accessible by or within control server 120 and the bots 110 may be configured to detect and send signals corresponding to the shunt guidelines 130A1-130S7 to the control server 120 so that a position of the bot and whether one or more bots are moving along e.g. the travel guide lines 130L1-130L4 can be determined by the control server.

Bot station guide lines 130C1-130C3 may also be provided on the transfer deck 130B for allowing the bots 110 to enter the bot stations 140 for interfacing with a respective multilevel vertical conveyor 150 from any one of the guide lines 130L1-130L4. The conveyor access guide lines 130C1-130C3 may be substantially similar to the shunt guide lines 130S1-130S2. In this example the entrance/exit guide lines 130C1, 130C2 of the bot station 140 are shown as not being aligned with any of the shunts 130S1-130S7 but in other embodiments the entrance/exit guide lines for the bot stations 150 may be substantially aligned with the shunts (see e.g. guide line 130S7) so that, where a course of travel permits, bots 110 can travel directly from a picking aisle to a bot station and vice versa. It is noted that while the embodiments of the transfer deck 130B and bot stations 140 are described herein with respect to line following, the transfer deck 130B and bot stations 140 may be configured so that the bots are guided by any suitable rail system.

Referring to Figs. 4A-4E an exemplary bot 110 is shown. In the embodiments the bot 110 includes a longitudinally extended frame 110FR that has a first end 1500 and a second end 1501 where the longitudinal axis (e.g. Y-axis) 110X extends from the first end 1500 to the second end 1501. At least one drive section 110D may be coupled to one of the first and/or second ends 1500, 1501 in any suitable manner for driving the bot 110 along the transfer deck(s) 130B and picking aisles 130A (Fig. 1). The drive 110D may include drive wheels, tracks or any other suitable drive mechanism for effecting travel of the bot along the transfer deck(s) 130B and picking aisles 130A. The other end 1500, 1501 of the bot 110 may have any suitable supports, such as caster wheels, fixed wheels, steerable wheels, and similar mechanisms for movably supporting the bot 110 as it travels along the transfer deck(s) 130B and picking aisles 130A. The bot 110 may have any suitable controller 1220 (Fig. 1) for effecting operation of the bot 110 and/or communication between the bot 110 and the control server 120 (Fig. 1). As may be realized the configuration of the bot shown in the drawings is merely exemplary and the bot may have any suitable configuration for carrying out the detection and positioning of case units relative to the bot 110 as described herein.

The frame 110FR of the bot 110 may form a payload bed 1510 or other suitable holding structure that is configured to hold case units or any other suitable payload. The payload bed 1510 may be suitably sized for accepting (e.g. holding) any case unit (or pickface where a pickface is one or more case units that is/are to be picked and carried by the bot 110) that may be transferred into or removed from the storage and retrieval system 100. For example, in the embodiments the payload bed 1510 may be larger than an expected pick size (i.e. larger than the pickface the bot is expected to pick from, for example, a storage shelf of a storage section 230A, 230B or any other suitable component of the storage and retrieval system such as the multilevel vertical conveyors).

A fence 1510F or any other suitable retaining device may be located at a side opening of the payload bed 1510. In one exemplary embodiment the fence 1510F may be attached to the frame 110FR in any suitable manner such as with fasteners or welding. In the embodiments the fence 1510F may also form part of the frame 110FR or be of unitary construction with the frame 110FR. The fence may include slots 1510FS disposed between stopping members 1510FM. The slots 1510FS may be configured to allow the fingers 110F of the bot arm 110A to extend through the fence 1510F in a substantially lowered position so that the fingers 110F can be, for example, extended into a storage shelf below a case unit. The fence 1510F may be configured to extend above the payload bed 1510 to form a barrier that substantially prevents case units from exiting the payload bed 1510 once the case units are positioned on the payload bed 1510. In this example, the number of slots 1510FS is equal to the number of fingers 110F but in alternate embodiments, the fence 1510F may be configured such that more than one finger 110F passes through a single slot (e.g. the number of slots is less than the number of fingers). It should be noted that the fence may have any suitable configuration for preventing case units from exiting the payload area when the case units are carried by the bot 110. For example, the fence may be movable so that the stopping members are retractable such that when in an extended configuration the fence prevents the case units from exiting the payload area.

The payload bed 1510 may include any suitable payload supports for supporting the case units when the case units are carried by the bot 110. For exemplary purposes only, the payload supports may include rollers 1510R, where a rotational axis of each roller 1510R is disposed substantially transversely (or laterally) to the longitudinal axis 110X of the bot 110. It is noted that the payload supports may also be belts, ball bearings or any other suitable supports. The rollers 1510R (or other suitable payload supports) may be inter-disposed with cantilevered fingers 110F of the bot 110 in an alternating manner. In the embodiments the rollers 1510R and the fingers 110F may be arranged relative to each other in any suitable manner. In one example, the payload supports may be driven in any suitable manner for justifying the payload in the payload area as described in, for example, United States Provisional Patent Application entitled "BOT PAYLOAD ALIGNMENT AND SENSING" with Attorney Docket Number 1127P014263-US (-#1) (Ser. No. 61/423,220) and filed on December 15, 2010 (now Attorney Docket Number 1127P014263-US (PAR) with United States Patent application number 13/327,040 filed December 15, 2011), the disclosures of which are incorporated by reference herein in their entireties.

The fingers 110F of the bot arm 110A extend laterally in the direction of arrow 1550 relative to the longitudinal axis 110X of the bot. The fingers 110F are also capable of movement in the direction of arrow 1673 (e.g. in a direction substantially perpendicular to the direction 1550 of extension and retraction of the fingers). The fingers may be driven by any suitable drive for lifting the pickfaces over the fence 1510F and into/out of the payload bed 1510 of the bot 110. The fingers 110F may be arranged to fit between slatted supports on the storage shelves 600 and multilevel vertical conveyor 150 shelves for transferring case units to and from the storage shelves 600 and multilevel vertical conveyors 150. It is noted that the bot arm 110A may have any suitable configuration for transferring case units to and from the bot 110. In the embodiments the arm 110A of the bot 110 is configured for extension on one lateral side of the bot 110 (e.g. the picking side of the bot on which a pick fence 1510F is located where the case units may be lifted over the pick fence during transfer to and from the bot and the pick fence may be used to hold case units on the bot 110 during transport). It is noted that the arm 110A may be configured for extension on both lateral sides of the bot. Where the arm 110A extends to one side of the bot 110, the bot orientation (e.g. front end leading or front end trailing) with respect to the direction of travel of the bot 110 is accounted for so that the extension direction of the arm 110A is located on the side of the picking aisle 130A1-130A7 or bot station at which the case units are to be picked from or transferred to.

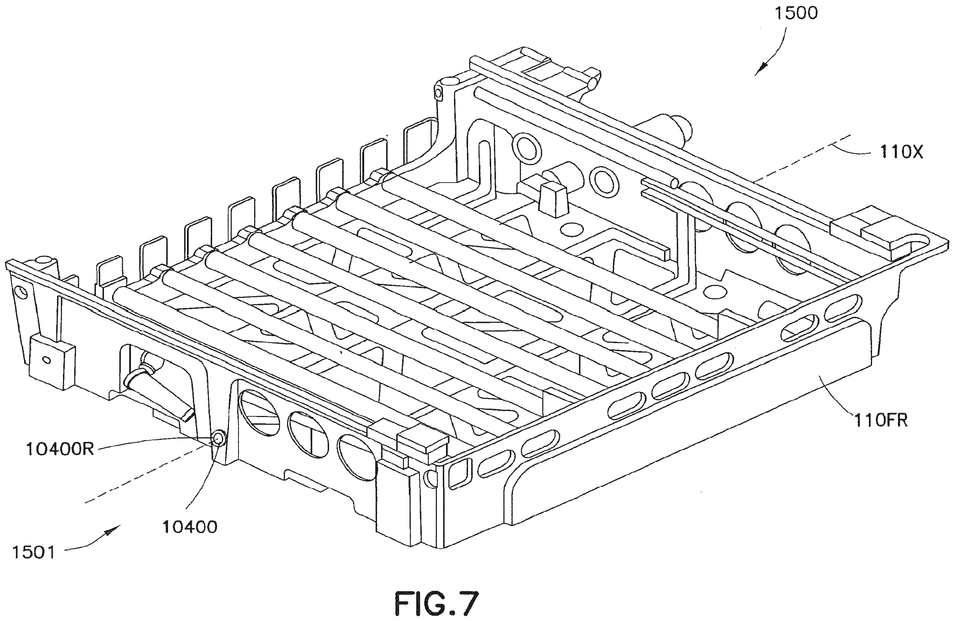

A case unit contact member 1530 may be movably located at least partially within the payload area. The case unit contact member 1530 may be driven laterally in the direction of arrow 1550 by any suitable drive. In this exemplary embodiment both of the case unit contact member 1530 and the fingers 110F are configured to move laterally in the direction of arrow 1550. The case unit contact member 1530 may be configured to move along rails 1530R (Figs. 7A and 7B). The rails may be mounted to the frame 110FR in any suitable manner for guiding the movement of at least the case unit contact member 1530. In the embodiments the movement of the case unit contact member 1530 may be guided in any suitable manner. For exemplary purposes only, referring to Figs. 7A and 7B, the case unit contact member 1530 may have slide members 1530D for movably coupling the case unit contact member 1530 to the rails 1530R. In the embodiments the case unit contact member 1530 may be movable independent of the fingers 110F in the direction of arrow 1550 for engaging case units disposed on the payload bed 1510. The fingers 110F may be releasably coupled to the case unit contact member 1530 in any suitable manner such that the fingers 110F are extended using the case unit contact member drive system. Suitable examples of the bot transfer arm, fingers and transfer arm drive system can be found in United States Provisional Patent Application entitled "AUTOMATED BOT TRANSFER ARM DRIVE SYSTEM," having Attorney Docket Number 112P014265-US (-#1) (Ser. No. 61/423,388) and filed on December 15, 2010 (now Attorney Docket Number 112P014265-US (PAR) with United States Patent Application number 13/326,993 filed December 15, 2011) and United States Provisional Patent Application entitled "AUTOMATED BOT WITH TRANSFER ARM" with Attorney Docket Number 1127P014264-US (-#1) (Ser. No. 61/423,365) and filed on December 15, 2010 (now Attorney Docket Number 1127P014264-US (PAR) with United States Patent Application number 13/326,952 filed December 15, 2011), previously incorporated by reference.

As described above, the bots 110 are configured to traverse the transfer deck(s) 130B and picking aisles 130A. The speed at which the bot 110 travels along the transfer deck(s) 130B may be higher than the speed at which the bot travels in the picking aisles. In the embodiments the bot 110 may travel at any suitable speeds within the travel decks and picking aisles. On the transfer decks 130B the bots 110 may be expected to travel at speeds up to about 10 m/s and higher speeds may be desired. The bot may travel along the transfer deck 130B in an unconstrained or unrestricted manner (e.g. substantially without mechanical guidance such as tracks, rails, etc.) while the bot 110 may be guided by, mechanical guide constraints such as tracks or rails during travel within the picking aisles 130A such as, for example, described in US Patent Application Number 12/757,312, previously incorporated by reference. The bot may include any suitable sensors, such as one or more line following sensors 380A, 380B and one or more wheel encoders 381, 382, for providing feedback to, for example, bot controller 1220 for guiding the bot along one or more of the transfer deck(s) 130B and picking aisles 130A. In the embodiments the bot controller 1220 may be located on board the bot 110 and/or be located remotely from the bot 110 but in, for example, bi-directional communication with the bot 110. In one example the control server 120 may act at least in part as the remotely located bot controller.

As described above the bot 110 may include at least two independently driven drive wheels 1211, 1212 and at least one swivelable (not steered, i.e., not provided with an independent steering input) wheel or caster 1261, 1262. In another aspect, the drive wheels 1211, 1212 may be driven by a common motor and a transmission that is capable of providing or generating differential torque in any suitable manner to the commonly driven wheels for a desired yaw input. It is noted that the casters 1261, 1262 and the drive wheel 1211, 1212 are disposed at substantially opposite longitudinal (e.g. front to back) ends of the bot 110 where a wheel is located substantially at each of the four corners of the bot. This caster wheel / drive wheel configuration may provide improved high speed stability for the bot and ease of control. Each drive wheel 1211, 1212 may have its own respective motor 383, 384 that is controlled by the bot controller 1220 in the manner described herein. As will be described in greater detail below, the casters 1261, 1262 may be selectively locked to allow stable travel of the bot 110 during, for example, substantially high speed bot travel along the transfer deck 130B. It is noted that during low speed travel the casters 1261, 1262 may be unlocked so that the bot 110 can enter, for example, picking aisles and/or multilevel vertical conveyor interface stations with either a front or a back of the bot 110 leading a direction of bot travel as described in, for example, United States Provisional Patent Application entitled "AUTONOMOUS TRANSPORT VEHICLE" having Attorney Docket Number 1127P014258-US (-#1) (Ser. No. 61/423,409) and filed on December 15, 2010 (now Attorney docket number 1127P014258-US (PAR) with U.S. serial number 13/326,423 filed on December 15, 2011), the disclosures of which are incorporated by reference herein in their entireties. Steering of the bot 110 along the transfer deck may be effected by applying a differential torque to the drive wheels 1211, 1212 through the respective independently controller motors 383, 384. The differential torque T may result in each of the drive wheels rotating at different speeds (e.g. rotations). The different rotational speeds of each wheel may cause the bot 110 to yaw or turn.

Each bot 110 may employ a combination of guide and positioning systems, for example, line following (e.g. on the transfer deck 130B) and rail guidance (e.g. within the picking aisles). The storage and retrieval system may be configured to allow the bot to transition between the structurally deterministic or restrained guide system within, for example, the picking aisles and the unrestrained guidance system of, for example, the transfer decks. The transitions between the guidance systems may also include a change in bot orientation (e.g. front end leading the direction of travel or the front end trailing the direction of travel). Each bot 110 may include any suitable guides mounted to a frame 110FR of the bot 110 where the guides are configured to engage the restrained guidance system in a predetermined and repeatable manner to allow for an accurate and predetermined reach of a transfer arm 110A of the bot 110 for transferring case units 101 between the bot 110 and, for example, a storage shelf 600. The guides may also, at least in part, facilitate the transition between the unrestrained and restrained guidance systems.

It is noted that the general direction of travel of the bots 110 may be with the front end 1500 leading the direction of travel with the caster wheels 1261, 1262 locked as described in United States Provisional Patent Application entitled "BOT HAVING HIGH SPEED STABILITY" with Attorney Docket Number 1127P014266-US (PAR), previously incorporated by reference herein, so that the bot may stably travel at substantially high speeds. At lower speeds the bot may travel with the front end leading or the front end trailing. The bot can also be configured to be driven with unlocked casters by any suitable control system on-board the bot or located remotely from the bot.

The bot 110 may have any suitable number of sensors 110S for sensing the guide lines 130L1-130L4, 130S1-130S7, 130C1-130C3 as described in, for example, United States Provisional Patent Application entitled "Automated Transport VEHICLE CHARGING SYSTEM" with Attorney Docket Number 1127P014157-US (PAR) and United States Patent Application Number 12/757,312 entitled "AUTONOMOUS TRANSPORTS FOR STORAGE AND RETRIEVAL SYSTEMS," previously incorporated by reference herein. It is noted that the bot can at times drive without the use of guide lines through any means of control such as, for exemplary purposes only, dead reckoning, state estimation, and use of gyroscopes and accelerometers. The bots 110 may have any number of suitable guide wheels 351-354 for guiding the bot 110 into and along the picking aisles 130A1-130A7 as will be described below. Suitable guide wheel/rail interaction is described in, for example, United States Patent Application Numbers 12/757,312, 12/757,381 and 12/757,220, previously incorporated by reference. It is noted that the guide wheels 351-354 may interface with any suitable guides in any suitable manner. While guide wheels are shown in the Figs. in other aspects it should be understood that the bot may include any suitable guide members having, for example, a two-dimensional pivot offset and a one-dimensional pivot offset. It is further noted that one or more of the guide members may have a different spring rate than other ones of the guide members.

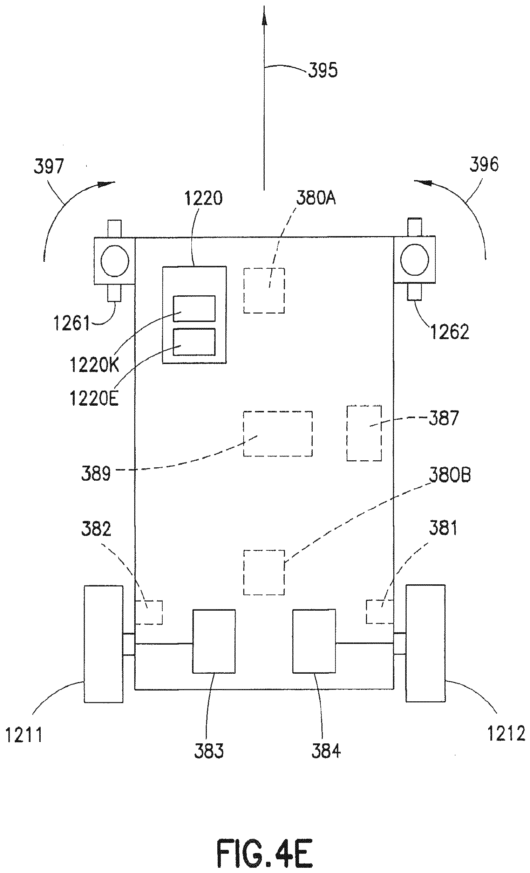

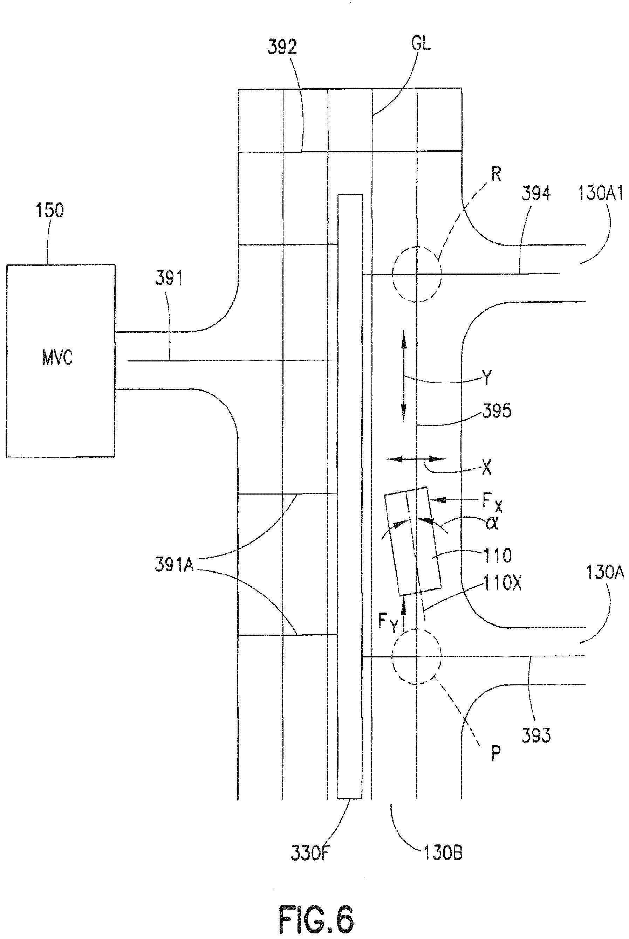

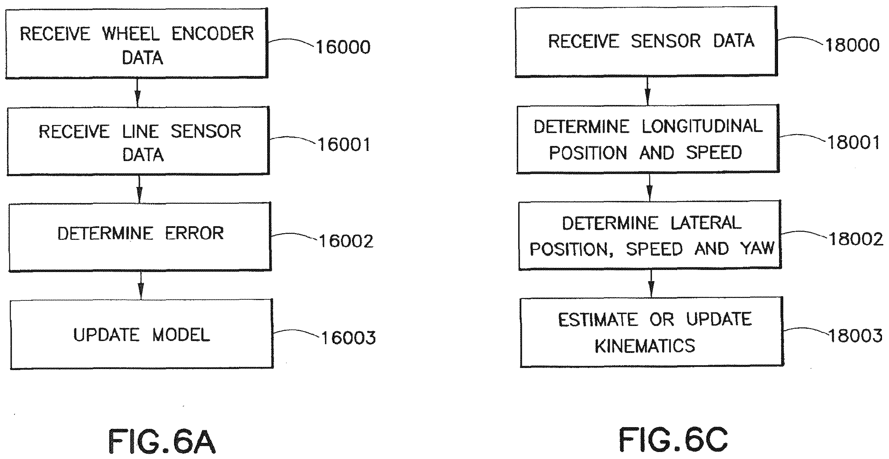

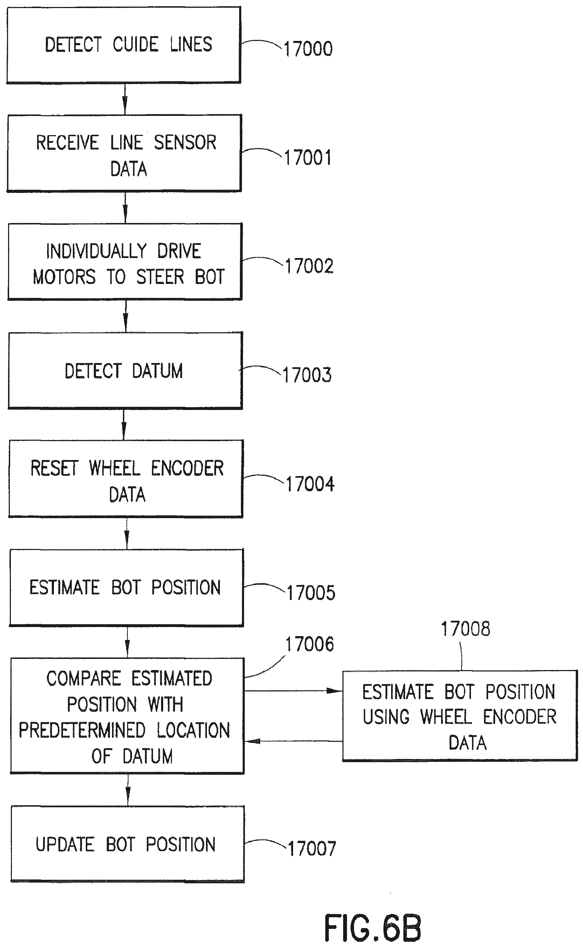

As an example of bot travel along the transfer deck and referring to Figs. 4E and 6, during straight line travel of the bot along, for example, guide line 395 (e.g. in 1 degree of freedom) both drive wheels 1211, 1212 rotate at substantially the same speed/angular velocity. If the travel direction of the bot has to be corrected for any suitable reason, one of the drive wheels 1211, 1212 may be slowed down to cause yawing of the bot. For example, if the bot 110 is to turn or yaw in the direction of arrow 396 the bot controller 1220 may cause drive wheel 1211 to rotate slower than drive wheel 1212 for turning the bot 110 in the direction of arrow 396. Likewise, if the bot 110 is to turn or yaw in the direction of arrow 397 the bot controller 1220 may cause drive wheel 1212 to rotate slower than drive wheel 1211 for turning the bot 110 in the direction of arrow 397. it is noted that the bot 110 is capable of bidirectional travel along guide line 395.

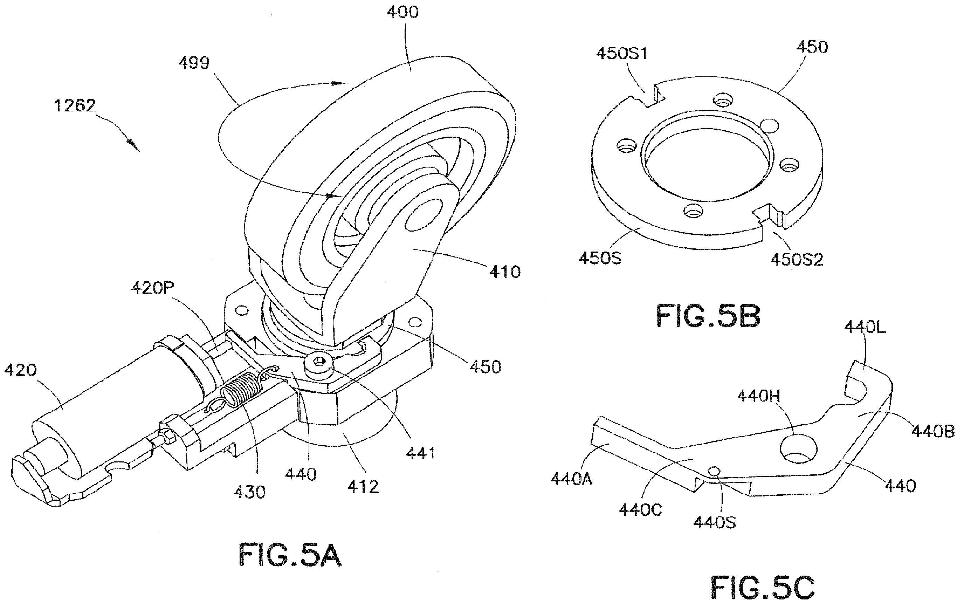

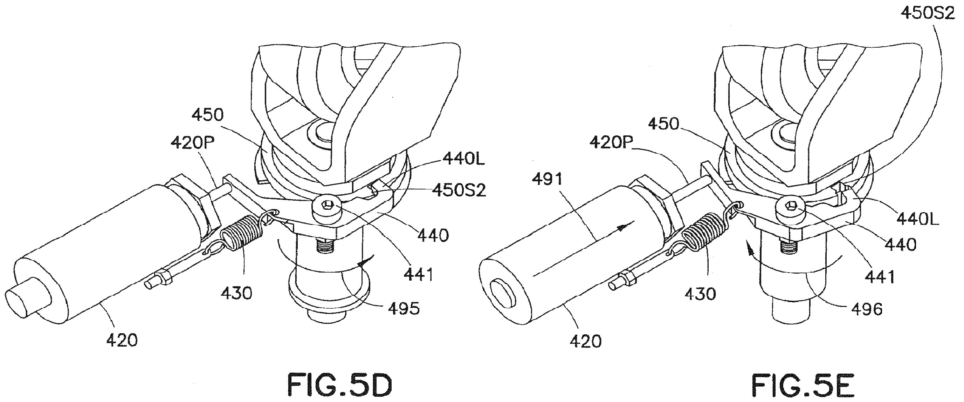

In the embodiments, as described above, the bot 110 may include one or more line following sensors 380A, 380B configured to detect one or more guidance lines 391-395 (which are inclusive of guide lines 391A which may be disposed on the transfer deck 130B at predetermined intervals in a direction transverse to the bot travel along the transfer deck may be provided as shown in Fig. 5) such as line 395 disposed on a surface of, for example, the transfer deck 130B for providing steering feedback to the bot controller 1220. It is noted that the one or more line following sensors 380A, 380B may be located at the front and rear of the bot 110 or the line following sensors may be located in any suitable location on the bot. The bot controller 1220 may be configured to receive signals generated by the one or more line following sensors 380A, 380B and or wheel encoders 381, 382 from which the controller 1220 determines suitable torque commands for driving the respective motors 383, 384 of drive wheels 1211, 1212.

The casters 1261, 1262 may be un-steered as noted before, but may have a directional or swivel lock configured to aid in steering and control of the bot 110. It is noted that during substantially straight line travel of the bot on the transfer deck 130B the casters 1261, 1262 may be locked (e.g. the plane of rotation of the caster wheel 400 is substantially aligned with a 1 degree of freedom axis 110X of the bot where the 1 degree of freedom axis 110X may coincide with the bot's straight line direction of travel) unless the degree at which the bot 110 is to turn (e.g. to account for corrections to the direction of travel) exceeds a predetermined amount (e.g. a predetermined turn angle for correcting tracking of the substantially straight line travel of the bot) or if the bot travel speed is below a predetermined amount. The casters may also be unlocked to provide the bot with steering that is more responsive than when the casters are locked so that quicker corrections to the bot's direction of travel can be made. It is noted that, as shown in Fig. 5, the positioning of the casters 1261, 1262 at an end of the bot 100 that is opposite the drive wheels 1211, 1212 operates to amplify the slip angle or amount of lateral movement at, e.g. a front of the bot where the casters are located. The slip angle or amount of lateral movement may be generated from the differential rotation at the drive wheels 1211, 1212. The slip angles will generally be small, and thus can be generated by correspondingly smaller differential rotation at the drive wheels which minimizes slipping of the drive wheels (which is undesirable). The slipping of the caster wheels may occur when the swivel lock of the casters is locked and a differential torque is applied to the drive wheels such that the caster wheels are "slid" in a direction substantially transverse to a plane of rotation of the caster wheel as it travels along, e.g., the transfer deck 130B. During the slipping of the caster wheel it is noted that the caster wheel may slow its rotation or substantially stop rotating.

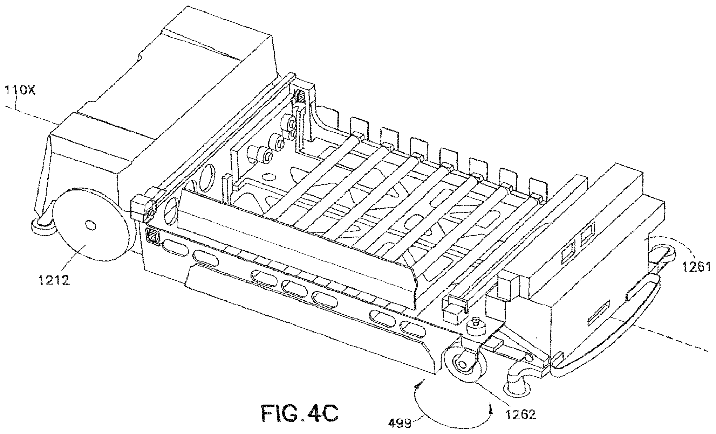

Referring to Figs. 4A, 4C, 4E and 6 as a non-limiting example only, the bot may travel on the transfer deck 130B along line 395 where the bot is to turn down picking aisle 130A1 in a manner substantially similar to that described in US Patent Application Number 12/757, 312 (previously incorporated by reference herein). The casters 1261, 1262 may be locked to allow for stable high speed bot travel until the bot makes or is about to make the turn onto the picking aisle 130A1. For example, as the bot slows below a predetermined travel speed, the casters 1261, 1262 may unlock allowing the caster wheels to swivel (e.g. giving the bot 2-degrees of freedom of movement). The bot controller 1220 may also determine that the bot is to make a turn (such as the substantially 90-degree turn into picking aisle 130A1) where the angle of the turn exceeds a predetermined turn angle. The casters 1261, 1262 may unlock upon the determination that the turn angle exceeds the predetermined turn angle for correcting tracking of the substantially straight line travel of the bot. The bot controller 1220 may also account for turn angle and bot speed when determining when to unlock the casters 1261, 1262. The controller 1220 may also be configured to cause the unlocking of the casters 1262, 1261 at substantially the same time that a differential torque is applied to the drive wheels 1211, 1212.

Referring now to Figs. 5A-5E the swiveling caster wheels 1261, 1262 having the selectively lockable swivel lock will be described. It is noted that while the casters are described with respect to caster 1262, caster 1261 is substantially similar. In accordance with the embodiments, the caster 1262 includes a frame 412, a wheel yoke 410, a wheel 400, a first locking member 440, a second locking member 450, an actuator 420 and a spring 430. It is noted that the caster may have any suitable components arranged in any suitable manner. In this example, the wheel 400 is rotatably mounted to the yoke 410 in any suitable manner. The second locking member 450 may be fixedly mounted to the yoke 450 so that the second locking member 450 and yoke 410 form an integral unit. In the embodiments the second locking member may be integrally formed with the yoke 410 in a unitary construction. The yoke 410 (and the second locking member 450 mounted thereto) may be pivotally mounted to the frame 412 so that the yoke assembly (e.g.

including the second locking member 450, the yoke 410 and the wheel 400) can be freely rotated 360-degrees in the direction of arrow 499 (see also Fig. 4C). It is noted that the axis of rotation of the yoke assembly is substantially perpendicular to a surface on which the bot 110 travels, such as, for example, the surface of the transfer deck 130B. The first locking member 440 may be pivotally mounted to the frame 412 by, for example, any suitable pivot 441 having a pivot axis that is substantially parallel with a swivel axis of the yoke 450 (and wheel 400). The pivot 441 may be for example, a shoulder bolt or any other suitable axle and/or retaining device. A spring 430 or any other suitable resilient member may be mounted between the frame 430 and a portion of the first locking member 440 so as to bias the first locking member 440 about the pivot 441 as will be described in greater detail below. The actuator 420 may also be mounted to the frame 412 for engaging a portion of the first locking member 440 in an opposing relation to the spring 430. The actuator 420 may be any suitable actuator, such as a solenoid, suitably connected to, for example, the bot controller 1220 where the controller is configured to cause actuation of the actuator 420. In one aspect the actuator 420 may be horizontally oriented (e.g. arranged to extend and retract horizontally) but in other aspects the actuator may have any suitable orientation. The swivel lock of the casters 1262, 1261 may be configured for rapid lock and release through, for example, a pulse actuation of the actuator 420 (e.g. electrical current is sent to the actuator for a predetermined amount of time so that the actuator is activated only for a limited time so that a piston 420P of the actuator is retracted for releasing the swivel lock of the caster and extended for locking the swivel lock of the caster in succession). In one example, the pulse actuation of the actuator 420 may activate the actuator for approximately one or two seconds for unlocking the swivel lock of the casters. In other examples the pulse actuation of the actuator may activate the actuator for less than about one second. In still other examples, the pulse actuation of the actuator may activate the actuator for more than about two seconds or any other suitable amount of time. The actuator may also be configured so that the caster is released when the piston 420P is extended and locked when the piston 420P is retracted. As may be realized, in one example, any suitable sensors may be provided and be in communication with the controller 1220 for sensing when each of the swivel locks of the casters is locked and/or unlocked. In other examples, sensors may not be provided for sensing when the casters are locked and/or unlocked.

In this exemplary embodiment the first locking member or lock bar/link 440 may have a substantially dog-leg or hooked shape. In alternate embodiments the first locking member 440 may have any suitable shape. The first locking member 440 may have a pivot hole 440H configured to accept the pivot 441 for allowing the first locking member to pivot about the pivot pin 441. A first portion 440B of the first locking member 440 may extend in a first direction from the pivot hole 440H while a second portion 440C of the first locking member 440 extends in a second direction from the pivot hole 440H. The first direction and second direction may be angled relative to one another by any suitable angle (e.g. from 0 to 360 degrees). In this example, the first portion 440B includes a protrusion or other locking feature 440L configured to engage a reciprocally shaped engagement feature 450S1, 450S2 of the second locking member 450. The second portion 440C may include an attachment feature 440S for attaching the spring 430 to the first locking member 440. The second portion 440C may also include an actuator engagement surface 440A. In this example, the a ratio between the lengths of the first and second portions 440B, 440C of the first locking member may be such that forces applied to the second portion 440C cause the precise movement of the first portion 440B for releasing locking feature 440L from the second locking member 450. For example, the lever action of the first locking member 440 converts the stroke of the actuator 420 to a short engagement stroke of the protrusion 440L into and out of the one or more engagement features 450S1, 450S2 that may result in substantial on/off control of the swivel lock to reliably engage and disengage the swivel lock while the bot is travelling at speed (e.g. about 10 m/s or more) and/or while the bot is travelling at any suitable speed.

In the embodiments the second locking member 450 is in the form of a disc but the second locking member may have any suitable configuration. The second locking member may include one or more engagement features or slots 450S1, 450S2 or other retaining feature configured to accept and reciprocally engage the protrusion 440L of the first locking member 440 or the second locking member may include a protrusion for engaging a reciprocally engagement feature or recess in the first locking member. In the embodiments, the second locking member may include two slots arranged so that the caster wheel 400 can be locked at about 0-degrees and about 180-degrees where the about 0 and 180-degree positions are arranged so that when locked the rotational plane of the wheel 400 is substantially aligned with a 1-degree of freedom axis 110X of the bot (which may coincide with the direction of straight line travel of the bot 110). In the embodiments the second locking member may have any suitable number of locking features arranged in any suitable manner for locking the wheel at any angle(s).

In operation, to lock the caster 1262 the actuator may be retracted (e.g. a piston 420P or other suitable engagement feature of the actuator may be retracted) so that it is not in substantial contact with the actuator engagement surface 440A of the first locking member 440. The spring 430 is configured to pull or otherwise bias the first locking member to rotate about pivot 441 in the direction of arrow 495 so that the locking feature 440L is substantially forced against a side surface 450S of the second locking member 450. As the yoke assembly rotates in the direction of arrow 499 and the biased locking feature 440L rides along the side surface 450S the force exerted by the spring 430 causes the locking feature 440L to be inserted into one of the slots 450S1, 450S2 for substantially preventing further rotation of the yoke assembly such that the caster is in a locked configuration. As noted above, the slots 450S1, 450S2 may be positioned so that when the locking feature 440L is inserted into one of the slots 450S1, 450S2 the rotational plane of the wheel 499 is substantially aligned with the 1 degree of freedom axis 110X of the bot. As such, one of the slots 450S1, 450S2 will be aligned with the locking feature 440L by virtue of the bot travelling along a substantially straight line path to facilitate the locking of the caster 1262.

To unlock the caster, the actuator 420 is actuated (e.g. the piston 420P or other engagement feature is extended in the direction of arrow 491) to engage the actuator engagement surface 440A of the first locking member 440. As described above, the actuation of the actuator 420 may be a pulse actuation (e.g. electrical current is sent to the actuator for a predetermined amount of time so that the actuator is activated only for a limited time so that a piston 420P of the actuator is retracted for releasing the swivel lock of the caster and extended for locking the swivel lock of the caster in succession). The force exerted by the actuator 420 on the first locking member 440 opposingly overcomes the force of the spring 430 causing the first locking member 440 to rotate about pivot 441 in the direction of arrow 496 such that the locking feature 440L disengages the slot 450S1, 450S2 for unlocking the swivel lock of the caster 1262. As a differential torque T is applied to the drive wheels the caster wheels 1262, 1261 want to rotate according to the way the bot 110 is turning. The disengagement or release of the locking member 440L from the slot 450S1, 450S2 allows the wheel 400 (e.g. through a rotation of the components of the yoke assembly) to freely rotate or swivel in the direction of arrow 499 by virtue of the differential torque applied to the drive wheels 1211, 1212. It is noted that the actuator is activated for a time period that is long enough for the slot 450S1, 450S2 to become misaligned with the locking feature 440L after which time the spring 430 causes the locking feature 440L to ride along the side 450S as described above to allow for unlocking and locking of the caster 1262, 1261 as described above.

As can be seen in e.g. Figs. 5A-5E, the configuration of the first locking member 440 is such that locking engagement between the first and second locking members 440, 450 occurs substantially laterally relative to the longitudinal axis or 1-degree of freedom axis of the bot 110 for increased rigidity (e.g. creating a greater moment arm for resisting rotation of the yoke assembly). However, the first locking member (and second locking member) may have any suitable configuration and spatial relationship with each other and the 1-degree of freedom axis of the bot for rigidly preventing rotation of the caster 1262, 1261. In the embodiments, a caster drive motor may be coupled to, for example, the yoke assembly, for providing steerable rotational movement of the caster 1262, 1261. It is noted that the coupling between the caster drive motor and the yoke assembly may be any suitable coupling including substantially rigid links, belts/pulleys, gear trains and any other suitable drive couplings.

Referring again to Fig. 4E and as described above, the bot 110 may include one or more wheel encoders 381, 382 configured to sense rotational movement of each of the drive wheels 1211, 1212. The wheel encoders 281, 282 may be any suitable encoders such as, for example, incremental encoders. In the embodiments the encoders may also be absolute encoders. In this example, the encoders 381, 382 provide data to, for example, the bot controller 1220 for determining a location of the bot 110 within the storage and retrieval system 100. An example of determining the location of the bot 110 within the storage and retrieval system 100 using encoders can be found in United States Provisional Patent Application entitled "BOT POSITION SENSING" having Attorney Docket Number 1127P014267-US (-#1) (Ser. No. 61/423,206) and filed on December 15, 2010 (now Attorney docket number 1127P014267-US (PAR) with U.S. serial number 13/327,035 filed on December 15, 2011), the disclosures of which are incorporated by reference herein in their entireties. The encoders 381, 382 on each of the drive wheels may also provide information for determining a state (e.g. acceleration, speed, direction, etc.) of the bot 110 as will be described below. However, the drive wheels 1211, 1212 may be subject to wheel slipping that adversely affects the confidence of the data received from the encoders 381, 382. Wheel slipping may be caused by, for example, a loss of traction. This loss of traction may be caused by, for example, a reduction in friction between each of the drive wheels 1211, 1212 and the drive surface of, for example, the transfer deck 130B or picking aisle 130A or one of the drive wheels 1211, 1212 lifting off of the drive surface of the transfer deck 130B or picking aisle 130A. Where the bot drive wheels 1211, 1212 lose traction the wheel position measured by the respective encoders 381, 382 will no longer reflect the actual bot 110 position. For example, if the bot 110 is accelerating then the wheel will tend to rotate faster than the bot is travelling. Conversely, if the bot is decelerating then the slipping wheel will tend to rotate slower than the bot is travelling.

In accordance with the embodiments, the bot controller 1220, or any other suitable controller of the storage and retrieval system (e.g. control server 120) may be configured to account for wheel slip by, for example, using the data from the encoder 381, 382 from the drive wheel 1211, 1212 that is not slipping. In one example, the controller 1220 may be configured to determine which drive wheel 1211, 1212 is slipping based on the torque being applied to the drive wheels 1211, 1212 by their respective drive motors 383, 384. As a non-limiting example, if a positive torque is being applied then a slipping wheel will accelerate in a positive manner so the encoder from the wheel with a lower velocity and/or rotational speed will be used to estimate the speed and position of the bot 110 within the storage and retrieval system 100. If a negative torque is being applied to the drive wheels 1211, 1212 then a slipping wheel will accelerate in a negative manner (e.g. decelerate) so the encoder from the drive wheel 1211, 1212 with a higher rotational velocity and/or rotation speed will be used to estimate the speed and position of the bot 110 within the storage and retrieval system 100. In the embodiments, one or more encoders may be placed on idler wheels (e.g. wheels that are not driven) such as the casters 1261, 1262 such that the controller can estimate the position and speed of the bot 110 based on the rotation of the non-driven wheels.

In the embodiments, the controller 1220 may be configured with predetermined drive wheel 1211, 1212 velocities or rotational speeds for any predetermined time of bot operation. The controller 1220 when determining the position and speed of the bot 110 when, for example, one wheel is slipping may compare the actual velocities and/or rotational speeds of the drive wheels 1211, 1212 with the expected or predetermined velocities and/or rotational speeds for each drive wheel 1211, 1212. In one example, the controller 1220 may be configured to perform inertia modeling to determine how much velocity/rotation speed change to expect due to, for example, acceleration of the bot 110 (and its drive wheels). If the velocities/rotational speeds of one or more of the drive wheels 1211, 1212 does not substantially match the expected or predetermined velocities/rotational speeds the encoder data from the one or more of the drive wheels 1211, 1212 whose data does not substantially match may be ignored and replaced with the expected or predetermined data when determining the bot's 100 position and speed.

It is noted that the determination of the bot's speed and position may be performed with, for example, models that both utilize and do not utilize suitable filters. In the embodiments the controller 1220 may be configured to filter the spurious data from the drive wheel encoders 381, 382 when determining bot 110 location/speed and state estimations. As an example, the controller 1220 may include, for example, a Kalman (or other suitable) filter to substantially eliminate the effects of wheel slip error in bot state estimation and location calculations. In one aspect the controller 1220 may include an extended Kalman filter 1220K that may be employed using substantially real time encoder updates (for example, at 2 kHz, every 0.5 milliseconds, every 50 milliseconds, or any other suitable frequency or time increments), along with any suitable time data regarding each sensor transition event (e.g. such as when a sensor detects a suitable guide line, see Fig. 6 on the transfer deck 130B). Referring to Fig. 6A a bot position determination method employing an extended Kalman filter is depicted. In general, calculating a bot 110 position may be performed using an extended Kalman filter by applying data received from any suitable encoder (Fig. 6A, Block 16000), such as one or more of encoders 381, 382, to determine the bot 110 position and/or predict sensor 380A, 380B transitions. However, as a variation to the general method depicted in Fig. 6A, the bot position finding Kalman model may be updated periodically. More specifically, sensor data may be received at each sensor 380A, 380B transition over a suitable guide line, such as guide lines 391-394 (as may be realized, additional guide lines 391A that are disposed on the transfer deck 130B at predetermined intervals in a direction transverse to the bot travel along the transfer deck may be provided as shown in Fig. 6), that includes a time of the transition and as appropriate, an identity and/or location of the guide line (Fig. 6A, Block 16001). Based upon the data from sensors 380A, 380B, an error may be calculated between an expected transition time for the location and the measured transition time (Fig. 6A, Block 16002). This error may then be employed to update the extended Kalman filter for more accurate subsequent estimations of bot positioning as determined by the wheel encoders 381, 382 (Fig. 6A, Block 16003). In general, one or more of the wheel encoder and line sensor data is employed to provide bot positioning data for control of the bot 110, while actual detected guide line transitions may be employed to update the pot positioning model, for example, the equations of an extended Kalman filter.

By way of example, for bot positioned at a particular position (Xe, Ye) on, for example the transfer deck 130B, and travelling at an estimated velocity and acceleration V, a, the model might predict a guide line being sensed or transitioned by one of the line sensors 380A, 380B at time $t_e$, and the system may identify the actual transition of the guide line at time $t_s$. The encoder 381, 382 time $t_s$ (or optionally at the time stamp) may generate an error expressed as:

$$\delta \equiv t_s - t_e \quad \text{or} \quad \underline{\delta} \equiv \begin{bmatrix} t \\ x \\ y \end{bmatrix}_s - \begin{bmatrix} t \\ x \\ y \end{bmatrix}_e$$

Then, extended Kalman filter equations may be used as described for example, in Applied Optimal Estimation by Arthur Gelb (MIT Press 1794). An adaptation of the formulation described in Gelb may be briefly stated as a system model:

$$\dot{x}(t) = f(x(t),t) + w(t); w(t) \approx N(0,Q(t))$$

and a measurement model:

$$z_k = h_k(x(t_k)) + v_k; l = 1,2,...v_k \approx N(0,R_k)$$

with state estimate propagation:

$$\hat{x}(t) = f(\hat{x}(t),t)$$

and error covariance propagation:

$$\dot{P}(t) = F(\hat{x}(T),T)P(t)F^T(\hat{x}(t),t) + Q(t)$$

As a significant advantage, this generalized technique permits use of individual sensor events incrementally, rather than requiring some number of sensor event to identify the location of the bot 110. It should be understood that, while a particular order of steps is implied in Fig. 6A, that the depicted operations are repetitively performed during operation of the bot 110, and that no particular order or timing of steps should be inferred. Nonetheless, it will be generally true in some implementations that encoder data from wheel encoders 381, 382 may be provided substantially continuously in real time, while line sensor 380A, 380B transitions of guide lines 391-394 (and 391A) may occur intermittently as the bot traverses, for example the transfer deck 130B. It should also be understood that, while an extended Kalman filter is one useful technique for converting encoder data into bot position information, other filters or linear modeling techniques may similarly be applied.

The data from the encoders 381, 382 may be further weighted based on signals from the one or more line following sensors 380A, 380B that provide signals to the controller 1220 corresponding to deviation of the bot from a guide line GL (Fig. 6) on, for example, the transfer deck 130B. For example, when one of the drive wheels 1211, 1212 slips a differential torque results between the drive wheels 1211, 1212 which causes the bot 110 to turn and deviate from the guide line GL.

The bot controller 1220 may also be configured to determine a position of the bot using, for example, the wheel encoders 381, 382 in combination with other position tracking features of the storage and retrieval system. In the embodiments, when in the picking aisles 130A the wheel encoders 381, 382 may be used in combination with slat counting (e.g. tracking the position of the bot relative to slats on the storage shelves with one or more slat detection sensors 387) as described in United States Provisional Patent Application entitled "BOT POSITION SENSING" having Attorney Docket Number 1127P014267-US (PAR), previously incorporated by reference herein. In the embodiments, when travelling on the transfer deck 130B the controller 1220 may be configured to use the wheel encoders 381, 382 in combination with a tracking of the guide lines 391-395 on the floor (e.g. driving surface) of the transfer deck 130B. Referring to Figs. 4E and 6 when travelling on the transfer deck 130B the one or more line following sensors 380A, 380B of the bot detect guide lines 391-395 (Fig. 6B, Block 17000). The controller 1220 receives signals from the one or more line following sensors 380A, 380B (Fig. 6B, Block 17001) and drives the individual drive motors 383, 384 accordingly (e.g. by adjusting the torque applied to each respective wheel for steering the bot as described above) for keeping the bot travelling along a desired one of the guide lines 391-395 (Fig. 6B, Block 17002). As can be seen in Fig. 6, each guide line GL running around the transfer deck 130B is crossed by, for example, transverse guide lines, such as guide line 392 located at turns on the transfer deck as well as guide lines 391, 393, 394 located at the picking aisle 130A locations. The crossing locations R, P of each of these guide lines 391-395 may be at known predetermined locations which are stored in any suitable memory accessible by the bot 110 such as for example, a memory of the bot 110 or the control server 120. Where the crossing locations R, P are stored remotely from the bot 110, such as in a memory of the control server, the bot 110 may be configured to access the crossing location information in any suitable manner such that the information is downloaded to the bot 110 or remotely read by the bot 110.

In one exemplary operation of bot travel, it is noted that verification or position qualification of the bot 110 on, for example, the transfer deck 130B may be determined from the crossing locations/position datum lines R, P on the transfer deck 130B (Fig. 6B, Block 17003) in a manner substantially similar to that described in US Patent Application Number 12/757,312 (previously incorporated by reference herein). For example, as the bot 110 travels along, for example, guide line 395 the bot passes the crossing location P and may verify its location using the predetermined location of the crossing location P. At this point the data from the wheel encoders may be reset (Fig. 6B, Block 17004) so that the encoders incrementally track, for example, a distance traveled by the bot 110 starting from crossing location P (which was previously verified) so that, for example, the controller 1220 can estimate the bot position relative to a last known verified position of the bot (Fig. 6B, Block 17005) . It is noted that resetting the wheel encoder data may substantially eliminate any tolerance and/or error stack ups generated by the wheel encoders. As the bot 110 continues to travel along the guide line 395 the bot 110 detects a second crossing location R. At substantially the time the second crossing location R is detected by the bot 110 the controller 1220 uses an estimated location of the bot 110 as determined from the wheel encoders 381, 382 and the last verified location of the bot (which in this example is at crossing location P) and compares the estimated location of the bot with the predetermined location of the crossing location R (Fig. 6B, Block 17006). If the estimated location of the bot substantially matches the predetermined location of the crossing location R then the controller verifies or otherwise qualifies the position of the bot 110 and updates the bots 110 location accordingly (Fig. 6B, Block 17007). The controller 1220 may also be configured to verify or otherwise qualify the bot's location in any suitable manner such as, for example, through the use of an extended Kalman filter as described above. As may be realized during the determination of the bot's position/location using the wheel encoders 381, 382 and line following the controller 1220 may be configured to account for wheel slip in the manner described above. If the estimated position does not match the predetermined location of the crossing location R the signal generated by the one or more line following sensors 380A, 380B corresponding to guide line 394 (at location R) may be ignored such that the location of the bot is estimated using the wheel encoders 381, 382 (Fig. 6B, Block 17008) until a next crossing location can be verified or otherwise qualified with the bot's estimated location (Fig. 6B, Block 17007). In the embodiments, if the estimated location of the bot 110 and the predetermined crossing location do not match the bot 110 may also be configured to verify its position in any suitable manner such as, for example, returning to a last known location and resetting the encoder information.

Referring to Figs. 4E and 6, the bot controller 1220 (or other suitable controller configured to control the bot, such as a remote controller as described above) may be configured with a state estimator module 1220E for estimating, for example, the kinematic state of the bot (e.g. position X, Y; position rates or speed $\dot{x}$, $\dot{y}$; and/or yaw angle $\alpha$ all with respect to time t) to determine command logic for controlling the bot rather than controlling the bot directly from sensor input. For example, using the state estimator module 1220E the bot 110 can determine, based on one or more sensor inputs, how fast it is travelling, what direction it is travelling, etc. and then determine what bot parameters need to be changed in order to arrive at a new desired speed, direction, etc. rather than, using bot speed as an example, reduce the torque on the drive wheels and use the wheel encoders as a gauge for stopping the reduction in motor torque when the encoders send signals corresponding to the desired new speed.

In one example, the command logic may allow, for example, the controller 1220 to know the speed, acceleration, and direction of the bot and calculate corrective control commands to, for example, the drive motors 383, 384 for maintaining a predetermined directional course and speed. For convention purposes, the Y (e.g. longitudinal) position of the bot is in a direction substantially parallel with a predetermined datum line or line of travel (in this example e.g. line 395) and may be an estimation of bot position between, for example, line crossing locations R, P or any other suitable lateral datum lines. The X (lateral) position of the bot is in a direction substantially transverse to the predetermined datum line 391-395 and may be an estimation of the amount of offset between, for example, the 1 degree of freedom axis 110X of the bot and the predetermined datum line 391-395. The yaw angle $\alpha$ (e.g. the divergence/convergence angle with the predetermined datum line) may be an estimation of the angle between the 1 degree of freedom axis 110X of the bot and the predetermined datum line 391-395. The state estimator module 1220E of the controller 1220 may also be configured to determine or otherwise estimate dynamic states and commands such as, for example, forces Fx, Fy exerted on the bot, the differential torque T applied by the drive motors 383, 384, a position rate or speed of the bot (e.g. linear or angular/yaw speeds) and/or changes in the position rate (e.g. acceleration) of the bot 110.

In addition to the wheel encoders 381, 382 and line following sensors 380A, 380B described above, the bot 110 may or may not also include any suitable inertial sensor 389, such as a 1 or 2 dimensional accelerometer. The controller may be configured to use signals from the inertial sensor 389 in combination with, for example, wheel odometry information from the wheel encoders 381, 382 and the line following sensors 380A, 380B for estimating the state of the bot 110.

Input may be provided to the controller 1220 for use with the state estimator module 1220E from, for example, one or more of the wheel encoders 381, 382, the line following sensors 380A, 380B and the inertial sensor 389 (Fig. 6C, Block 18000). Input may also be provided to the controller for use with the state estimator from slat sensors (e.g. sensors that sense the storage shelf slats). An example, of storage slat sensors can be found in United States Provisional Patent Application entitled "BOT POSITION SENSING" having Attorney Docket Number 1127P014267-US (PAR), previously incorporated by reference herein.

In the embodiments the bot may have, for example, a steady state of operation (e.g. no acceleration/deceleration) and a dynamic state of operation (e.g. during acceleration/deceleration). During steady state operation with the differential motor torque T substantially equal to zero the state estimator may obtain data for longitudinal position Y and longitudinal speed $\dot{y}$ from, for example, wheel odometry as described above (Fig. 6C, Block 18001). It is noted that the longitudinal speed $\dot{y}$ may be obtained from the wheel encoders using, for example, a Kalman or other suitable filter accounting for wheel slip as described above. Lateral position X and lateral speed $\dot{x}$ may be obtained from, for example, the line following sensors 380A, 380B when the line following sensors 380A, 380B at, for example, the front and rear of the bot 110 cross the lines 393, 394, 391. The lateral position X of the bot and the yaw angle $\alpha$ can be calculated from the front and rear positions of the bot 110 as determined by the sensors 380A, 380B when the sensors cross the lines 393, 394, 391 (Fig. 6C, Block 18002). In one example, between line 393, 394, 391 crossings the differential movement of the wheels (as determined from e.g. wheel encoders or other suitable sensors) indicate rotation or yaw of the bot. In another example, between line 393, 394, 391 crossings the rotation or yaw angle $\alpha$ of the bot 110 may be determined from a dynamic model in, for example, an extended Kalman filter. The lateral speed $\dot{x}$ can be determined by the state estimator, for example, as follows:

$$\dot{x} = \dot{y} \tan \alpha$$

where $\dot{y}$ may be verified using, for example, crossing locations R, P or any other suitable transverse datum lines similar to guide lines 393, 394, 391.

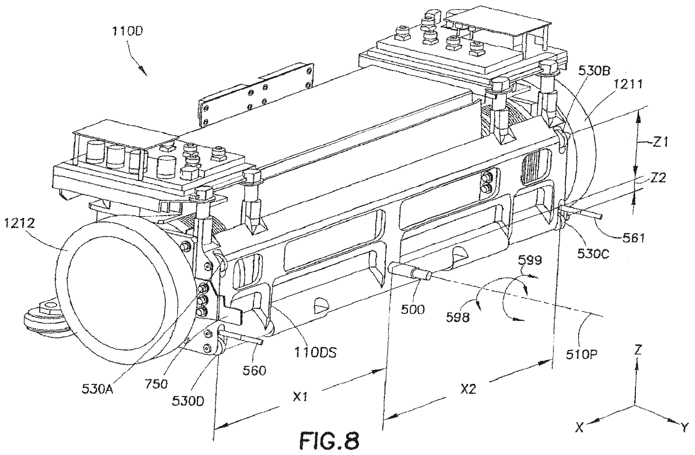

Referring also to Fig. 5A-5E, in one exemplary embodiment the controller 1220 may command actuation of the actuators 420 for unlocking the casters 1262 based on the state of the bot 110 so that quick steering response can be obtained for correcting the yaw angle $\alpha$ of the bot. The yaw angle $\alpha$ of the bot may also be corrected with the casters locked, which may provide a slower steering response with more bot stability. The controller 1220 may know (via the state estimator module 1220E) an estimate of the differential torque T to apply to the drive wheels 1211, 1212 so that a maximum differential torque T can be applied to the drive wheels 1211, 1212 for correcting the yaw angle $\alpha$ of the bot 110. It is noted that the estimate for the transverse speed $\dot{x}$ (or any other suitable kinematics of the bot) can be updated (Fig. 8, Block 18003) at any suitable time such as when, for example, there is no line sense signal from speed $\dot{y}$ and yaw angle $\alpha$. The yaw angle $\alpha$ and the rate of change of the yaw angle $\dot{\alpha}$ can be estimated using, for example, the inertial sensor 389.

Once the differential torque T is applied based on the estimated value of the yaw angle $\alpha$, the controller 1220 waits to receive a guide line sense signal from one or more of the line following sensors 380A, 380B. When the line sense signal is received, the controller 1220 may command a reduction in differential torque T and continue to update the kinematic information of the bot 110 until the yaw angle $\alpha$ is at a predetermined value such that the bot is substantially travelling along the desired guide line 391-395. It is noted that the differential torque T may be reduced proportionately to the approach rate (e.g. $\dot{x}$, $\dot{\alpha}$) to, for example, the center of the guide line 391-395. When the differential torque T is reduced to substantially zero the bot is travelling in a substantially straight line enabling the casters to lock into their locked configuration as described above (e.g. the locking feature 440L may ride along the side surface 450S of the second locking member 450 until it is substantially aligned with and engages one of the slots 450S1, 450S2. It is noted that when the differential torque T is applied, the transverse position X and speed $\dot{x}$ may be determined by the controller 1220 (via the state estimator module 1220E) from, for example, a mean of the wheel encoder signals where the differential torque T is known and the wheel encoder signals (from each drive wheel 1211, 1212) are related to one another (or otherwise weighted) based on the differential torque T such that, for example, a difference of inner to outer wheel encoder signals (depending on which way the bot is turning where the inner encoder is on the inside of the turn) is applied to the encoder signal based on the magnitude of the differential torque T.

In the dynamic state of bot operation, e.g. where the bot 110 is undergoing positive acceleration or negative acceleration (i.e. deceleration) and the differential torque T is substantially zero or greater than zero the kinematic state of the bot may be determined in a manner substantially similar to that described above with respect to the steady state of bot operation. It is noted that where travel of the bot 110 is guided by a contact linear guide system (e.g. tracks or rails) as in, for example, the picking aisles 130A (see for example, United States Patent Application Number 12/757,312, entitled "AUTONOMOUS TRANSPORTS FOR STORAGE AND RETRIEVAL SYSTEMS," previously incorporated herein) there is no data sent to the controller 1220 by, for example, the line following sensors 380A, 380B. As such, the state estimation of the bot 110 within the contact linearly guided travel areas is only in the longitudinal direction. The position of the bot 110 within the picking aisles may be determined by the state estimator (without direct wheel encoder readings) in combination with, for example, the storage shelf slat location validation as described in United States Provisional Patent Application entitled "BOT POSITION SENSING" having Attorney Docket Number 1127P014267-US (PAR), previously incorporated by reference herein.

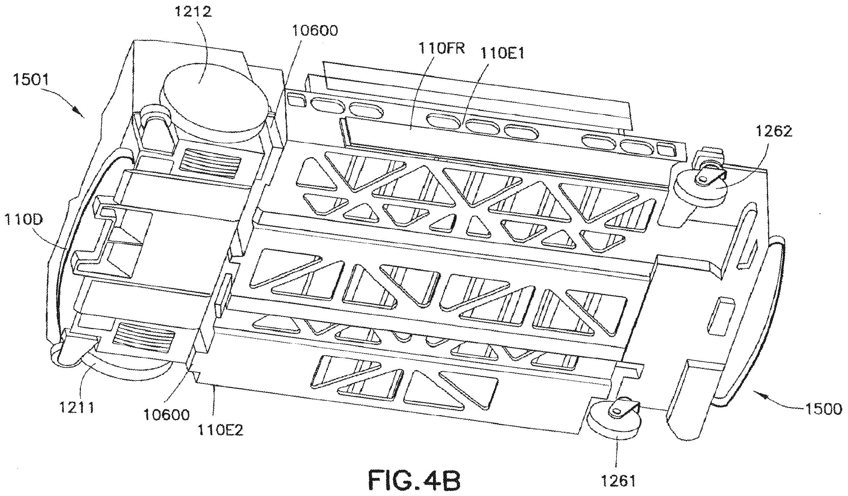

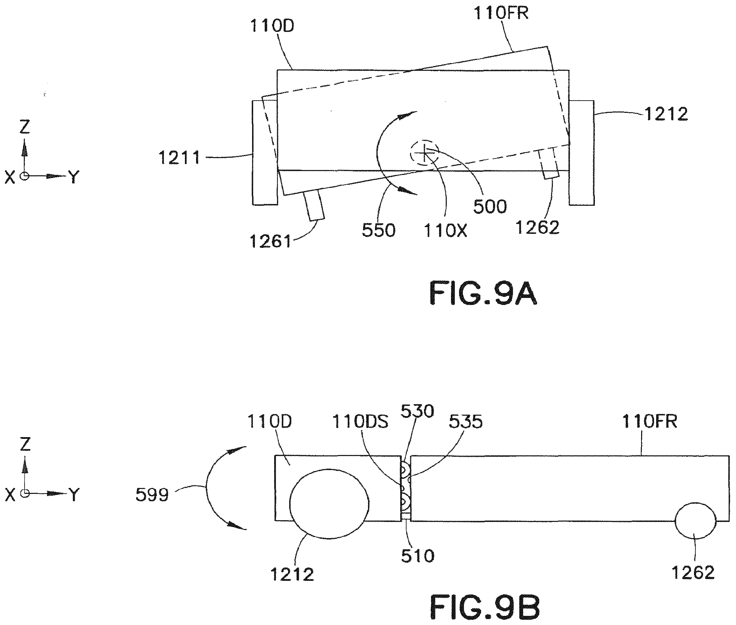

Still referring to Figs. 4A and 4B and also to Figs. 7, 8, 9A and 9B, the at least one drive section 110D may be connected to the frame in any suitable manner. In one aspect the drive section 110D may be connected to the frame by any suitable movable coupling system. In the embodiments the movable coupling system may be a suspension system that may pivotally (or otherwise movably) couple the drive section 110D to the frame 110FR in any suitable manner to allow for relative rotation between the at least one drive section 110D and the frame 110F. It should be noted that while a pivotal coupling is shown and described that in other aspects the coupling may be, for exemplary purposes only, any suitable articulated coupling including but not limited to linearly movable couplings, rotatable couplings or a combination thereof. As may be realized, the bot may be supported at four points (e.g. one wheel 1261, 1262, 1211, 1212 being located at substantially each corner of the bot). If all four support wheels were rigidly connected to the frame 110FR and the bot were to travel over bumps or other raised/uneven structures on, for example, the travel surface of the transfer decks 130B and/or picking aisles 130A one or more wheels of the bot may be lifted off of the travel surface causing, for example, a loss of wheel traction. As may also be realized, a position of the bot may be within the storage and retrieval system 100 may be determined at least in part with any suitable wheel odometry system, as described in e.g. United States Provisional Patent Application entitled "BOT POSITION SENSING" having Attorney Docket Number 1127P014267-US (PAR) the disclosure of which was previously incorporated herein by reference, such that a loss of wheel traction may cause an incorrect odometry reading. The movable connection between the at least one drive section 110D and the frame 110FR may substantially prevent the drive wheels 1211, 1212 from lifting off of the travel surface such that accurate bot positioning can be determined.

In the embodiments, the frame 110FR may include a pivot or articulation member 10400. The pivot member 10400 may be located substantially in line with the longitudinal axis 110X of the bot 110 such that the weight of the bot (and any payload thereon) may be centrally supported at the end 1501 of the bot 110. It is noted that the pivot member 10400 may be suitably located at any location on the end 1501 of the bot frame 110FR. The pivot member may be integrally formed with the frame 110FR or affixed to the frame in any suitable manner. In this example the pivot member 10400 may include any suitable recess or aperture 10400R configured to accept a corresponding pivot axle 500 of the at least one drive section 110D.

The at least one drive section 110D may include a pivot axle 500 configured to be received within the recess 10400R of the pivot member 10400 or the frame 110FR may include the pivot axle and the drive section 110D may include the pivot member. As may be realized, in the embodiments the frame and drive section may have any suitable structure for allowing the drive section to pivot relative to the frame. In this example, the pivot axle 500 may be pivotally retained within the pivot member 10400 in any suitable manner such as by clips, bolts, snaps or any other suitable retention devices. The pivot axle 500 and pivot member 10400 may be configured such that the drive section 110D pivots axially in the direction of arrow 550 with respect to the longitudinal axis 110X of the frame 100F. The connection between the drive section 110D and the frame 110FR may also be configured to allow drive section 110D and the frame 110FR to pivot relative to each other in any suitable direction(s).

In the embodiments the drive section 110D may include one or more guide members 530. The guide members 530 may be wheels, sliders or any other suitable structure that, for example, engages a surface 535 of the frame 110FR when the drive section 110D and the frame 110FR are coupled to each other through the pivotal coupling 510 (e.g. formed by pivot axle 500 and pivot member 10400). The frame 110FR may also include the guide members 530 such that the guide members engage a surface of the drive section 110D when the frame 110FR and drive section 110D are movably coupled to each other. In this example the guide members 530 may be mounted to the drive section 110D so that the guide members 530 allow the relative pivotal (or otherwise) movement between the drive section 110D and the frame 110FR while in part substantially maintaining a substantially rigid longitudinal axis of the bot 110. For example, in the embodiments the guide members 530 are laterally spaced (e.g. along the X-axis) from the pivot axis 510P of the pivotal coupling 510 by any suitable distance X1, X2. The distance X1, X2 between the pivot axis 510P and the guide members 530 may substantially prevent (through contact between the guide members 530 and the surface 535 of the frame) yawing motion (e.g. in the direction of arrow 598 in the X-Y plane) between the drive section 110D and the frame 110FR. At least one of the guide members 530 may also be vertically spaced (e.g. along the Z-axis) from the pivot axis 510P by any suitable distance Z1, Z2. The distance Z1, Z2 between the pivot axis 510P and the at least one of the guide members 530 may substantially prevent (through contact between the one of the guide members 530 and the surface 535 of the frame) pitching motion (e.g. in the direction of arrow 599 in the Y-Z plane) between the drive section 110D and the frame 110FR. In this example, the guide members 530A-530D may be located substantially at corners of an interface surface 110DS of the drive section 110D such that two guide members 530A, 530B are vertically spaced above the pivot axis 510P by a distance Z1 and two guide members 530C, 530D are vertically spaced below the pivot axis 510P by distance Z2. Alternatively, it is noted that all of the guide members 530A-530D may be located above the pivot axis or below the pivot axis. The guide members 530A, 530D may be laterally spaced from the pivot axis (on a first side of the pivot axis) by distance X1 and guide members 530B, 530C may be laterally spaced from the pivot axis (on a second opposite side of the pivot axis) by distance X2. In the embodiments there may be any suitable number of guide members arranged (e.g. spaced from the pivot axis) to prevent yawing and pitching motion between the drive section 110D and the frame 110FR.

In the embodiments the axial stability (e.g. in yaw and pitch) of the coupled drive section 110 and frame 110FR may be provided through one or more of the guide members 530A-530D and the connection between the pivot member 10400 and pivot axle 500. For example, in one exemplary embodiment the pivot axle 500 may be axially secured within the pivot member 10400 so that the guide members 530A-530D are held substantially against the surface 535 of the frame. One or more of the guide wheels 530, the pivot axle 500 and pivot member 10400 may also be adjustable in the longitudinal or X-direction to take up or substantially eliminate any relative movement in the X-Y and Y-Z (e.g. yaw and pitch) planes between the drive section 110D and the frame 110FR. It is noted that the guide wheels may be held against the surface 535 of the frame 110 in any suitable manner for providing a substantially rigid longitudinal coupling between the drive section 110D and the frame 110FR. As may be realized, the guide members 530 and/or the pivotal coupling 510 may only allow relative rotation (e.g. roll) between the drive section 110D and the frame 110FR in the direction of arrow 550 in the X-Z plane. In other aspects the coupling between the drive section and frame may allow any suitable relative movement between drive section and the frame.

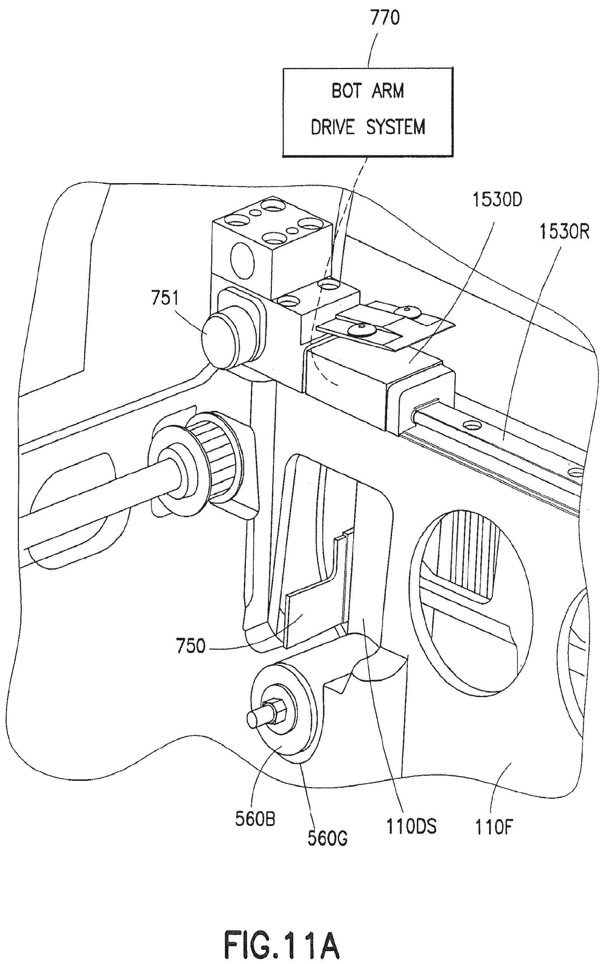

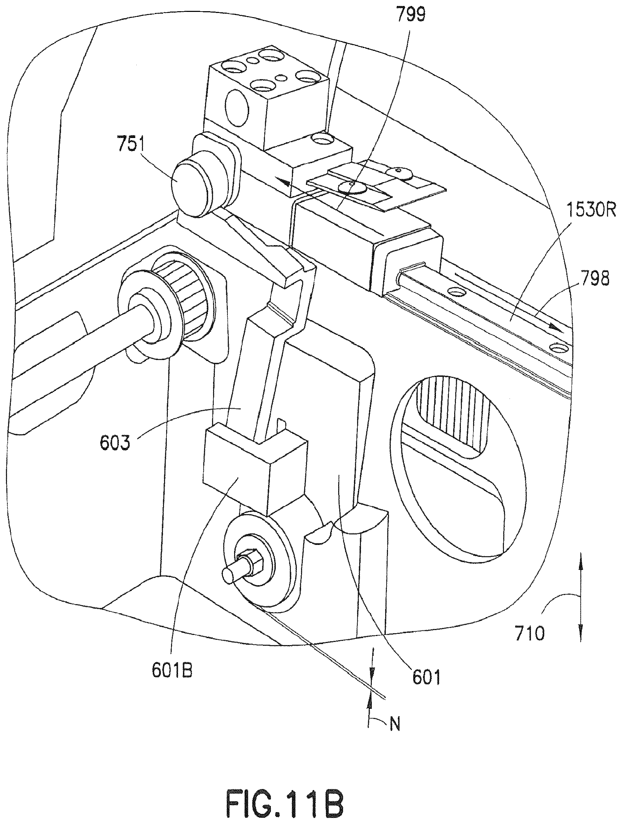

As may be realized the rotation or pivoting between the drive section 110D and the frame 110FR in the direction of arrow 550 (in the X-Z plane) may be limited in any suitable manner. Referring to Figs. 8, 11A and 11B in one exemplary embodiment, protruding members 560, 561 may extend from interface surface 110DS of the drive section 110D. In this example, the protruding members 560, 561 are located at opposite lateral ends of the drive section 110D but the protruding members may be located at any suitable position for limiting pivotal travel between the drive section 110D and the frame 110FR. The protruding members 560, 561 may be any suitable members configured to engage, for example, a recess or groove 560G such as, for example, pins, bushings, threaded rods, studs, etc. It is noted that while the protruding members 560, 561 are described with respect to protruding member 560 the protruding member 561 is substantially similar to protruding member 560. In this example the protruding member 560 may be a stud or pin. A suitable bushing 560B may be connected to the protruding member 560. In one example, the protruding member 560 and the bushing 560B may be integrally formed with each other. In another example, the bushing 560B may be fixed to the protruding member 560 by mechanical or chemical fasteners, by an interference fit between the two or in any other suitable manner. In the embodiments the bushing 560B may be configured to substantially cushion the pivoting travel of the drive section 110D as the drive section 110D reaches its travel limits. Alternatively the bushing may provide a substantially hard stop for the pivoting drive section 110D. The travel limits of the drive section 110D may be effected by recesses or grooves 560G formed in the frame 110FR that correspond to each of the protruding members 560, 561. The bushing 560B for each of the protruding members 560, 561 and the corresponding grooves 560B may be configured such that when the bot 110 is on a substantially level surface the bushing 560B is spaced from an end of the corresponding groove 560B by any suitable predetermined distance N. The bushings 560B and grooves 560G may be sized such that the bushing moves substantially in the direction of arrow 710 within the groove 560G during pivoting movement of the drive section 110D substantially without interference. Contact between the bushing 560B and the end of the groove 560G limits the travel (e.g. pivotal movement) between the drive section 110D and the frame 110FR.

Referring to Figs. 4B, 10A, 10B, 10C, 10D, 11A and 11B the relative pivotal movement between the drive section 110D and the frame 110FR may allow movement between the frame 110FR and the drive section 110D as the bot arm 110A (Fig. 4A) is extended laterally to pick/place a pickface from one of the storage shelves of the storage sections 230A, 230B or multilevel vertical conveyors 150A, 150B. The bot 110 may include a locking system or lockout mechanism having one or more locking devices 10600 configured to passively lock out the bot suspension for substantially preventing relative movement between the drive section 110D and frame 110FR as the bot arm 110A is extended laterally or in any other suitable direction (e.g. extension of the bot arm 110A passively causes a locking of the suspension). Though the embodiments are described with respect to the passive locking of the suspension when the arm is extended, in other aspects in the locking devices 10600 may be configured to actively lock the suspension in any suitable manner independent of the arm position. The locking device 10600 may be located any suitable predetermined distance from the pivot axis 510P. In one example one or more locking devices 10600 may be located substantially at or adjacent a respective side edge 110E1, 110E2 of the frame 110FR. While a locking device 10600 is shown adjacent each of the edges 110E1, 110E2, a single locking device may be located along only one of the edges 110A1, 110E2. Still any suitable number of locking devices 10600 may be located at any suitable location(s) relative to, for example, the pivot axis 510P.

In this example, the locking device 10600 may include a body 10601, a resilient member 10602 and a lever member 10603. The body may have any suitable configuration and is shown in the Figs. as having a substantially rectangular shape for exemplary purposes only. In this example the body may be configured for attachment to the frame 110FR but, the body may also be configured for attachment to the drive section 110D. The body 10601 may include a recess 10602R suitably sized so that the resilient member 10602 may be inserted into the recess 10602R. In this example, the resilient member 10602 may be an extension spring but in alternate embodiments the resilient member 10602 may be any suitable resilient member such as a leaf spring, compression spring or torsion spring and the body 10601 may be suitably configured for interfacing with or housing the resilient member in any suitable manner. The lever member 10603 may be pivotally mounted to the body 10601 in any suitable manner such as through, for exemplary purposes only, a pivot pin 10610. The lever member 10603 may have a compound surface having a first surface 10603A and a second surface 10603B that engages a cam 751 as described below and a surface 10603E that engages an engagement member 750 as will also be described below. The body 10601 may be configured so that the lever member 10603 pivots in the direction of arrow 10620 which may be substantially parallel with the interface surfaces 535, 110DS of the frame 110FR and drive section 110D when the body is mounted to, for example, the frame 110FR. The resilient member 10602 may be positioned relative to the lever member 10603 and/or the lever member 10602 may be configured such that the resilient member 10602 engages the lever member 10603 for rotating the lever member 10603 in the direction of arrow 798 towards an aperture 10611 formed in the body 10601 so that the locking device 10600 is biased in a suspension locked position (e.g. in the direction of arrow 798) when the arm is extended and retraction of the arm acts against the force provided by the resilient member 10602 for locking the suspension so that the arm moves in the direction of arrow 799.

The locking system may also include an engagement member 750 corresponding to each of the locking devices 10600. The engagement member 750 may be configured for attachment to, for example, the drive section 110D such that the engagement member 750 extends from the interface surface 110DS. The engagement member 750 may be positioned so that it extends through the aperture 10611 in the body for interfacing with the surface 10603E of the lever member 10603. The engagement member 750 and/or the aperture 10611 may be configured to allow movement of the engagement member 750 within the aperture 10611 as the drive section 110D and frame 110FR pivot relative to one another.

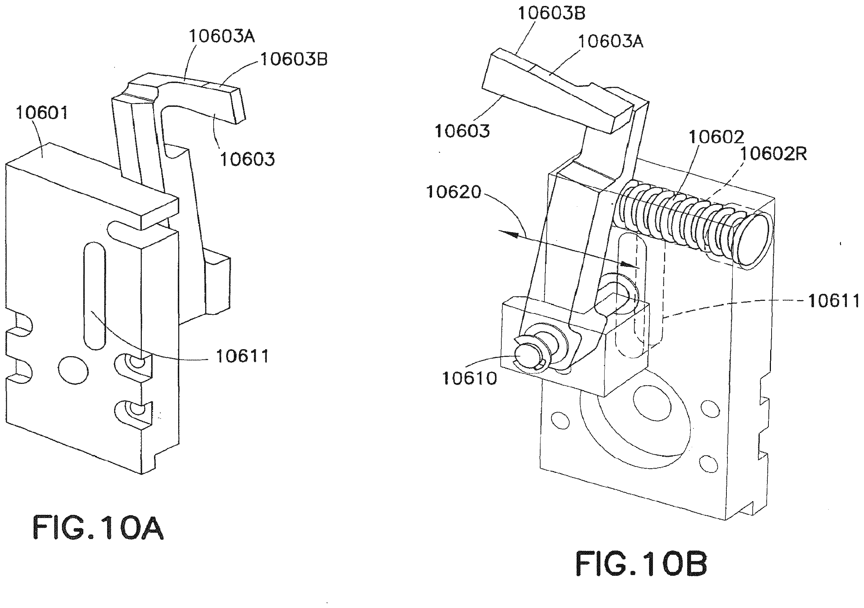

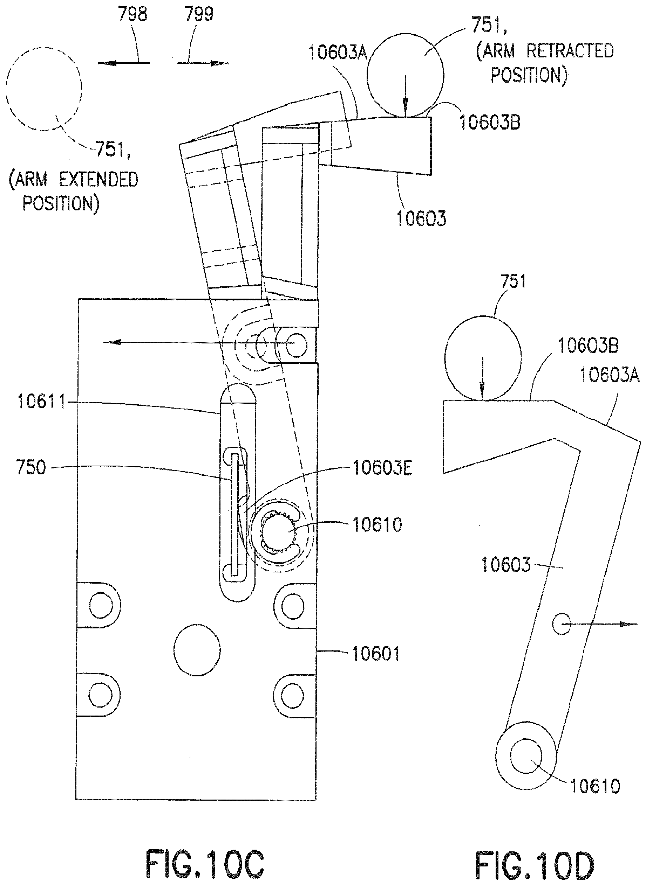

One or more cams or idlers 751 may be rotatably mounted to the frame 110FR. Each cam 751 may be positioned at any suitable location of the frame 110FR for interfacing with, for example, surfaces 10603A, 10603B (or any other suitable surface) of a respective one of the lever members 10603 of the one or more locking devices 10600. For example, the cam 751 may move with, for example, a respective one of the slide members 1530D as the bot arm 110A is extended and retracted. As the bot arm 110A is extended the cam 751 moves in the direction of arrow 798 moving from surface 10603B to surface 10603A and eventually off of the lever 10603 allowing the lever member to pivot in the direction of arrow 798 towards the aperture 10611 for locking the suspension of the bot 110. As may be realized the force exerted on the lever member 10603 by the resilient member 10602 may hold the lever member against the surface of the cam 751 so that as the cam 751 moves the lever member is moved towards and away from the aperture 10611 for locking and releasing the suspension of the bot 110. When the bot arm 110A is retracted the cam 751 moves in the direction of arrow 799 so that the cam 751 engages the surface 10603A and then the surface 10603B of the lever 10603 causing the lever to pivot in the direction of arrow 799 for releasing the suspension of the bot 110. As seen best in Fig. 10D, when the cam 751 is engaged with the surface 10603B of the lever, the surface 10603B of the lever member 10603 is oriented in such a way so that the cam 751 remains substantially in place substantially without any outside influence (such as from motors or clips) due to, for example, the normal force between the cam 751 and the surface 10603B provided by the resilient member 10602, which is overcome when the bot arm is extended. In alternate embodiments, the cam 751 may be stationary (e.g. does not move with, for example, the slide members 1530D) and driven by any suitable drive system such that the driven rotation of the cam causes the pivoting movement of the lever 10603 for locking and unlocking the bot suspension.

As described above, the engagement member 750 extends through the aperture for interfacing with the lever member 10603. As movement of the cam 751 in the direction of arrow 798 allows movement of the lever member 10603 in the direction of arrow 798, the surface 10603E of the lever member 10603 contacts the engagement member 750 and pinches or clamps the engagement member 750 against any suitable surface of the body 10601. For example, the engagement member 750 may extend into a block member 601B of the body 10601 such that at least a portion of the engagement member 750 is located between a surface of the block member 601B and the lever member 10603 (e.g. the engagement member is pinched or clamped between the lever member and the surface of the block as the cam is rotated). The pinching or clamping force exerted on the engagement member 750 may be a predetermined force sufficient to substantially rigidly hold the drive section 110D in a predetermined position relative to the frame 110FR (e.g. substantially prevent relative pivoting between the frame and drive section such that the drive section and frame form a single substantially stiff structure) as the bot arm 110A is laterally extended to, for example, transfer pickfaces between the bot 110 and a storage shelf or multilevel vertical conveyor.

In the embodiments, the one or more cams 751 may be suitably connected to any suitable bot arm drive system 770 for passively locking the suspension of the bot 110. For example, the connection between the one or more cams 751 and the bot arm drive system 770 may cause operation of the locking device 10600 as the bot arm 110A is extended for passively/automatically locking the suspension of the bot. The cam 751 may also be driven by an independently operable drive system so that the bot suspension can be actively locked/unlocked independent of the bot arm position. In the embodiments, when the bot arm 110A is in a predetermined retracted or homed position the locking device 10600 is automatically released and the drive section 110D and frame 110FR are allowed to pivot (or otherwise move) relative to one another. For example, during operation of the bot 110, the bot 110 may traverse the picking aisles 130A and transfer deck 130B with the bot arm 110A in a homed (e.g. retracted) position. With the bot arm 110A in the homed position the bot suspension is unlocked and the drive section 110D and frame 110FR are free to pivot relative to one another allowing the suspension to conform to the travel surfaces of the picking aisles 130A and transfer deck 130B. As the bot arm 110A is extended the cam 751 is passively moved (by virtue of its connection to the bot arm drive system 770) for allowing the lever member 10603 to move in the direction of arrow 798 for pinching or clamping the engagement member 750 and passively locking the bot suspension so that the drive section 110D and frame 110FR form a single substantially rigid or stiff structure substantially eliminating any rotation or tipping of the frame 110FR that may cause the extended arm 110A to tip relative to a surface on which a pickface is located or being transferred to. As the bot arm 110A is retracted to the home position the cam 751 is passively moved for moving the lever member 10603 in the direction of arrow 799 for releasing the engagement member 750 and passively unlocking the bot suspension. It is noted that the cam may be passively or actively driven in any suitable manner for causing operation of the locking device.

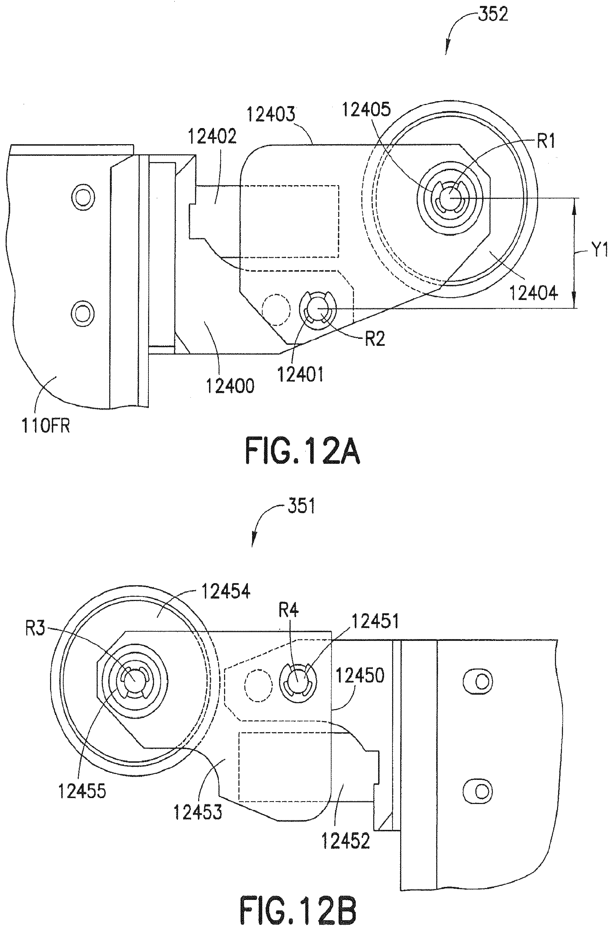

Referring also to Figs. 12A and 12B the bot may include pairs of guides, such as for example, guide wheels 351-354 located at the outer corners of the bot frame 110FR. While the guides are described herein as being guide wheels in alternate embodiments any suitable type of guides may be used. One pair of guides may be located at each end of the bot 110. For example, guide wheels 351, 352 may be located at a front 1500 of the bot while guide wheels 353, 354 are located at a back of the bot 110. Each guide wheel pair may include a substantially compliant guide wheel 352, 353 and a substantially fixed guide wheel 351, 354 located on opposite sides of the bot 110. For exemplary purposes only in the embodiments the substantially fixed guide wheels may be located on a side of the bot from which the transfer arm extends 110A. In the embodiments the substantially fixed guide wheels may alternatively be located on the side of the bot opposite the side from which the bot arm extends. It is noted that in the embodiments, the substantially fixed and substantially compliant guide wheels may have any suitable locational arrangement on the bot.

As shown in Fig. 12A the substantially compliant guide wheels 352, 353 may be pivotally mounted to the bot 110 on a mounting member 12400 and may include a pivot member 12401, a bumper 12402, a guide wheel fork 12403, wheel 12404 and wheel retainer 12405. In the embodiments, the guide wheel fork 12403 is pivotally mounted at a first end to the mounting member 12400 by pivot member 12401. The pivot member may be any suitable axle or pivot. The wheel 12404 is rotatably mounted to a second end of the guide wheel fork 12403 by wheel retainer 12405. The wheel retainer 12405 may be any suitable axle or other retaining mechanism. The bumper 12402 may be any suitable shock absorber that is mounted between the bot frame 110FR and the wheel 12404 for substantially limiting the travel of the wheel 12404 while allowing the wheel to rotate about wheel retainer 12405. It is noted that in the embodiments the substantially compliant guide wheels may have any suitable configuration.

As shown in Fig. 12B the substantially fixed guide wheels 351, 354 may also be pivotally mounted to the bot 110 on a mounting member 12450 and may include a pivot member 12451, a bumper 12452, a guide wheel fork 12453, wheel 12454 and wheel retainer 12455. In the embodiments, the guide wheel fork 12453 is pivotally mounted at a first end to the mounting member 12450 by pivot member 12451. The pivot member may be any suitable axle or pivot. The wheel 12454 is rotatably mounted to a second end of the guide wheel fork 12453 by wheel retainer 12455. The wheel retainer 12455 may be any suitable axle or other retaining mechanism. The bumper 12452 may be any suitable shock absorber or other suitable resilient member that is mounted between the bot frame 110FR and the wheel 12454 for substantially limiting the travel of the wheel 12454 and absorbing forces applied to the bot 110 while allowing the wheel to rotate about wheel retainer 12455. It is noted that in the embodiments the substantially fixed guide wheels may have any suitable configuration.

Referring to both Figs. 12A and 12B it is noted that the axis of rotation R1, R3 of the wheels 12404, 12454 relative to the axis of rotation R2, R4 of the guide wheel forks 12403, 12453 for the substantially compliant guide wheels 352, 353 and the substantially fixed guide wheels 351, 354 may be different. For example, the axis of rotation R1 of the substantially compliant guide wheels 352, 353 may be longitudinally offset by a distance Y1 from the axis of rotation R2 of the guide wheel fork 12403 while the axes of rotation R3, R4 for the substantially compliant guide wheels 351, 354 are located substantially longitudinally aligned with each other. These guide wheel configurations may allow both guide wheels to rotate about respective axes R2, R4 while entering, for example, a picking aisle 130A1-130A7. However, when travelling within the picking aisle 130A1-130A7 these configurations may maintain substantially fixed guide wheels 351, 354 substantially fixed about axis R4 and allow the substantially compliant guide wheels 352, 353 to rotate about axis R2. As may be realized, the guide wheels are asymmetrically compliant guide members so that a stiffness of the at least one first guide member in response to a force in a predetermined direction relative to the first guide member frame of reference (e.g. in an X-Y plane) is different than a stiffness of the at least second guide member in response to the force in the predetermined direction relative to the second guide member frame of reference (e.g. in an X-Y plane) as will be described in greater detail below.

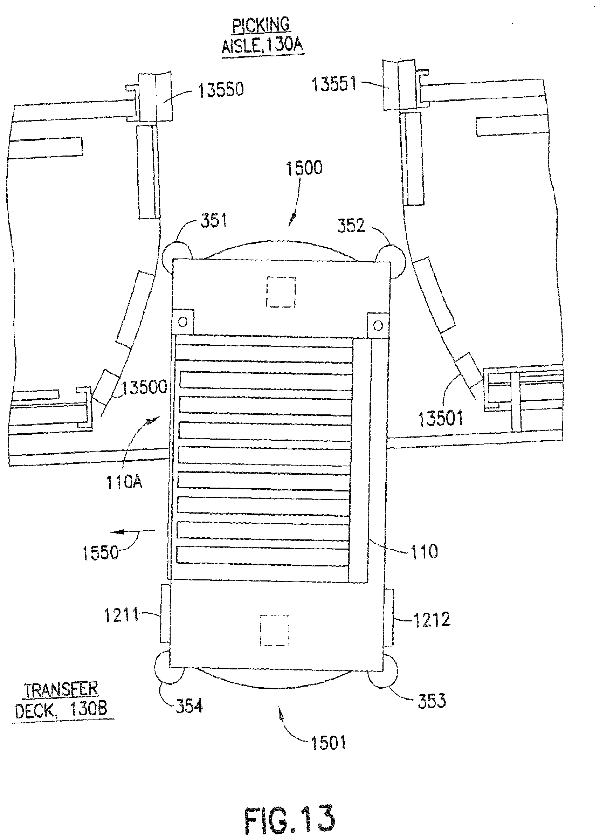

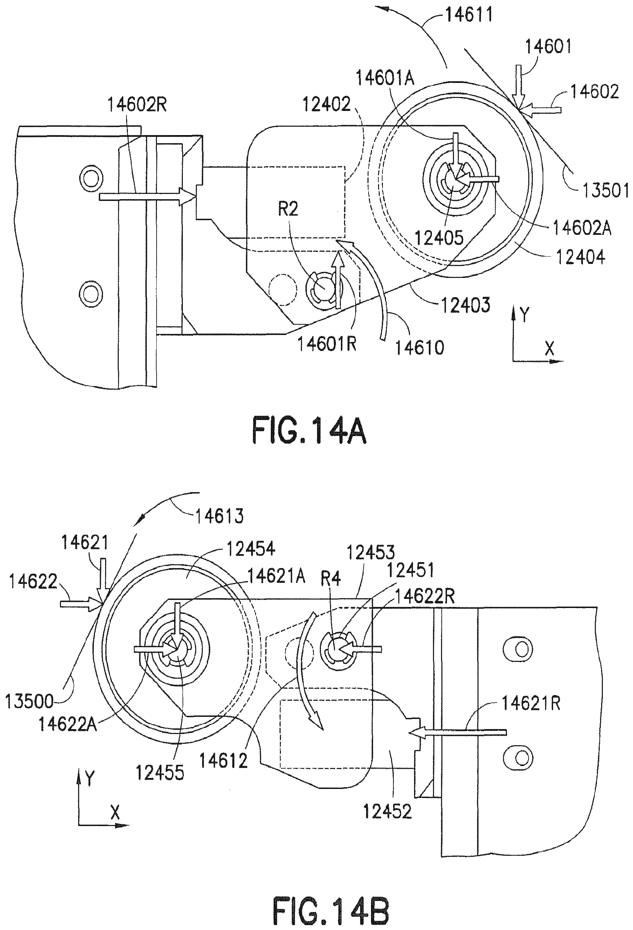

Referring also to Figs. 3, 13, 14A and 14B each of the guide wheels 351-354 may be configured to interface with lead-in structures or guides of the storage and retrieval system 100. For example, in one exemplary embodiment a pair of angled guide members 13500, 13501 may be positioned at least partially on the transfer deck 130B in a transition area for transitioning between the transfer deck and, for example, a picking aisle. The angled guide members 13500, 13501 may be any suitable guide members having any suitable configuration for cooperating with one or more guide wheels 351-354 and at least in part directing a bot 110 into the picking aisle 130A. For example, bot 110N may be travelling along guide line 130L4 (which provides a general direction of travel in the direction of arrow 298) to pick/place a case unit 101 in picking aisle 130A7. In the embodiments the case unit may be located on the left side 260 of the aisle 130A7. As can be seen in Fig. 13 the bot transfer arm 110, in this example, is configured to extend to the left side of the bot 110 (with respect to a longitudinal or Y axis of the bot defined between the front and back ends 1500, 1501). As such, for the bot to pick/place a case unit 101 from the left side 260 of the picking aisle 130A7 the bot travels down the picking aisle with the front end 1500 leading the direction of travel. As the bot turns down the picking aisle 130A7 a differential torque is applied to the independently driven drive wheels 1211, 1212 causing the front end 1500 of the bot to swing in the direction of arrow 270. As the front end 1500 of the bot 110 turns in the direction of arrow 270 substantially compliant guide wheel 352 may contact the angled guide member 13501. The contact between the substantially compliant guide wheel 352 and guide member 13501 may assist the bot 110 in aligning with the guide rails 13550, 13551 of the picking aisle. For example, as the bot 110 continues to turn, the guide members 13500, 13501 form a funnel-like arrangement such that contact between the substantially compliant guide member 352 effects contact between substantially fixed contact member 351 and guide member 13500. As the bot moves further into the picking aisle guide wheels 353, 354 may also come into contact with their respective guide members 13500, 13501 for alignment with the guide rails 13550, 13551. As may be realized, during guided travel of the bot, guide wheels of the bot do not always have to be in contact with the guide rails. For example, tolerance variations, bends in the rails, variations in assembly of the storage structure may cause the guide wheels to temporarily break contact with a surface of the guide rails. It is noted that the guide rail system could include a system of opposing magnetic fields (e.g. the bot includes a magnetic field generator and the storage structure includes a magnetic field generator each having opposing polarities) that are configured to maintain a travel path of the bot without providing any substantial resistance to bot motion along the travel path.

When the substantially compliant guide wheel, such as guide wheel 352 contacts the guide member 13501 forces 14601, 14602 are applied by the guide member 13501 to the wheel 12404 in both the X and Y directions, where the Y direction is parallel with the longitudinal axis (e.g. front to back) of the bot 110 and the X direction is transverse (e.g. substantially parallel with the lateral axis of the bot 110) to the Y direction. These forces 14601, 14602 are transferred to the wheel retainer 12405 as translated forces 14601A, 14602A. These translated forces 14601A, 14602A cause resultant forces 14601R, 14602R to be exerted in both the X and Y directions by the substantially compliant guide wheel back towards the guide member 13501. Because the axis of rotation of the guide wheel retainer 12405 is longitudinally offset (e.g. in the Y-direction) from the axis of rotation R2 of the pivot member 12401 by the distance Y1 (Fig. 12A) the forces exerted on the guide wheel cause a rotating moment 14610 such that the wheel fork 12403 (and wheel 12404) rotates about the pivot member 12401 in the direction of arrow 14611. The bumper 12402 may in part resist or absorb the translated forces applied to the guide wheel and provide at least in part some resistance to the rotating moment 14610. It is noted that a similar moment may be generated on substantially compliant guide wheel 352 as the guide wheel 352 contacts the guide member 13501 and the back 1501 of the bot comes into alignment with the guide rails 13550, 13551.

As the substantially fixed guide wheel, such as guide wheel 351 contacts the guide member 13500 forces 14621, 14622 are applied by the guide member 13501 to the wheel 12404. These forces 14621, 14622 are transferred to the wheel retainer 12455 as translated forces 621A, 14622A. These translated forces 621A, 14622A cause resultant forces 14621R, 14622R to be exerted in the X direction by the substantially compliant guide wheel back towards the guide member 13500. Because of the arrangement of the wheel retainer 12455 and pivot member 12451 being laterally aligned only the forces in the Y direction may contribute to creating a rotating moment 14612 such that the wheel fork 12453 (and wheel 12454) rotates about the pivot member 12451 in the direction of arrow 14613. The bumper 12452 may in part resist or absorb the translated forces applied to the guide wheel and at least in part resist the rotating moment 14612. It is noted that a similar moment may be generated on substantially fixed guide wheel 354 as the guide wheel 354 contacts the guide member 13500 and the back 1501 of the bot comes into alignment with the guide rails 13550, 13551.

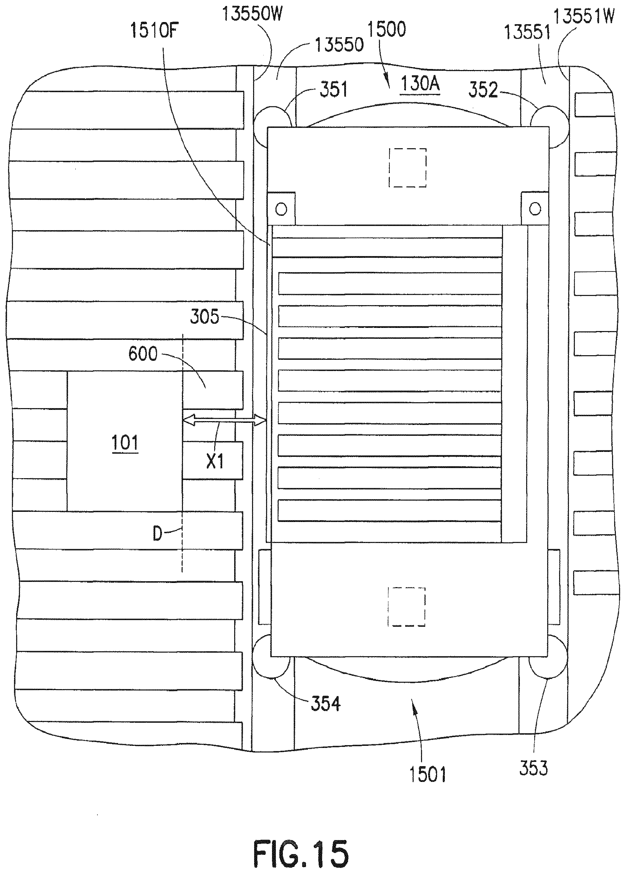

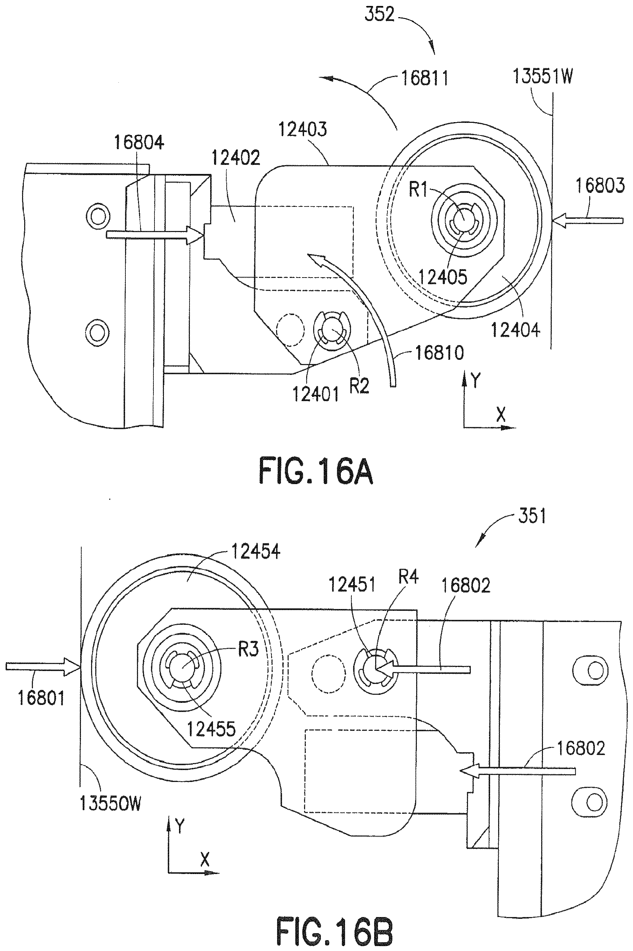

Referring to Figs. 15, 16A and 16B, once in the picking aisle 130A the guide wheels 351-354 may ride along vertical portions 13550W of the guide rails 13550, 13551 for positioning the bot 110 a predetermined distance X1 from the case units 101 stored on the storage shelves 600. In this example, the distance X1 is determined between the pick fence 1510F of the bot 110 and a predetermined datum plane D along which the case units 101 may be aligned. When in the picking aisle 130A the vertical portion 13550W of rail 13550 may exert a force 16801 in the X direction against the wheel 12454 of substantially fixed guide wheel, such as guide wheel 351. A resultant force 16802 may be applied by the substantially fixed guide wheel 351. Because of the axis of rotation R3 of the wheel retainer 12455, the axis of rotation R4 of the pivot member 12451 and the force 16801, 16802 being along the same lateral (e.g. X direction) line the substantially fixed guide wheel remains substantially rigid without any rotating moments being applied to the guide wheel 351. Similar forces may be generated on and by substantially fixed guide wheel 354. Because there are no rotating moments applied to the substantially fixed guide wheels 351, 354 while in the picking aisles the rigid arrangement of the guide wheels 351, 354 maintains, for example, the pick fence 1510F of the bot 110 at the predetermined lateral distance X1 away from the datum plane D.

The forces exerted on the substantially compliant guide wheels, such as guide wheel 352, in the picking aisles 130A may be substantially similar to those described above with respect to the substantially fixed guide wheels 351, 354. For example, the vertical portion 13551W of guide rail 13551 may exert force 16803 in the X direction against the wheel 12405 which results in a resultant force 16804 being generated by the guide wheel 352. Because the axis of rotation R1 of the wheel retainer 12405 (e.g. substantially the point at which the force 16803 is applied) is longitudinally offset from the axis of rotation R2 of the pivot member 12401 a rotating moment 16810 is generated causing the wheel 12404 (and wheel fork 12403) to pivot in the direction of arrow 16811 about pivot member 12401. The wheel 12404 may continue to pivot about pivot member 12401 until substantially stopped by the bumper 12402. It is noted that similar forces may be generated against and to the substantially compliant guide wheel 353. The forces (e.g. the resultant force 16804) applied in this example, by the bumpers 16804 of their respective substantially complaint guide wheels 352, 353 in combination with the compliant rotation of the respective wheel forks 12403 about respective pivot members 12401 causes the bot 110 to be pushed laterally so that the substantially fixed guide wheels 351, 354 are held against the vertical portion 13550W of the guide rail 13550 for maintaining the distance X1.

Referring to Fig. 3, as an example of bot travel, a bot 110Y travelling along a path corresponding to guide line 130L1 may be instructed to transfer an item to a storage location in picking aisle 130A5. However, the bot 110Y may have already passed the shunt guide line 130S5 corresponding to picking aisle 130A5. The bot may continue to travel along guide line 130L1 until it encounters the next available shunt (e.g. a shunt not being used by another bot) such as shunt guide line 130S4. The bot may turn onto shunt guide line 130S4 and then turn onto one of the guide lines 130L3, 130L4 so that the bot 110 is travelling in substantially the opposite direction towards the picking aisle 130A5. The bot may continue to travel along one of the guide lines 130L3, 130L4 until it encounters shunt guide line 130S5, corresponding to picking aisle 130A5, where the bot turns onto shunt guide line 130S5 for transitioning into or otherwise entering the picking aisle 130A5 guide way (such as, for example, a rail guidance system).

As described above, the direction (e.g. front end leading or front end trailing) the bot enters the picking aisle may depend on which side of the picking aisle a case unit is to be picked from or placed to. In the examples above with respect to bots 110N, 110Y the bot entered the picking aisles with the front end 1500 leading. The travel paths defined by guide lines 130L1-13L4 may provide at least limited bidirectional bot travel for allowing the bot to enter the picking aisle with the front end 1500 trailing the direction of travel. For example, still referring to Fig. 3 the bot 110M may be designated to transfer a case unit to the right side 261 of picking aisle 130A4. However, when travelling along any one of the guide lines 130L1-130L4 if the bot were to turn onto guide line 130S4 for transitioning into the picking aisle 130A4 with the front end 1500 leading the direction of travel the transfer arm extension would be located on the wrong side of the aisle. It is noted that the bot could be fitted with any suitable device such as a turntable that could pivot or rotate the bot's payload bed within the bot allowing for the extension arms of the bot to be positioned for extension/retraction on the correct side of the aisle. The bot 110M may be configured so that the bot 110M travels past the picking aisle 130A4 along, for example, guide line 130L4. Any suitable bot collision avoidance or other traffic management may allow the bot 110M to travel in the direction of arrow 271 (e.g. substantially opposite the direction of the general traffic flow along guide path 130L4 as indicated by arrow 298) so that the bot can enter the picking aisle, in a manner substantially similar to that described above, with the back end 1501 leading the direction of travel (e.g. the front end 1500 trailing the direction of travel). As may be realized the guide members 13500, 13501 (Fig. 13) may be configured to guide the bot 110M into the picking aisle 130A4 with the bot travelling forwards (with the front end leading the direction of travel) or backwards (with the back end leading the direction of travel) where the interaction between the substantially fixed guide wheels 351, 354 and substantially compliant guide wheels 352, 353 and the guide members 13500, 13501 occurs in a manner substantially similar to that described above. It is noted that the arrangement of the fixed guide wheels 351, 354 and the substantially compliant guide wheels 352, 353 may be such that the substantially fixed guide wheels are located on the inside of the bot turns when entering, for example, the picking aisles (and/or the bot stations as described below).

As may be realized, the bots exiting the picking aisles may do so with either the front end 1500 leading or trailing the direction of travel. For example, where each picking aisle 130A has a single lane of travel the bot may exit the picking aisle in the opposite orientation in which the bot entered the picking aisle. For example, bot 110M may enter picking aisle 130A4 with the back end 1501 leading the direction of travel as described above and may exit the picking aisle 130A4 with the front end leading the direction of travel.

In the embodiments the bot station 140 may be in the form of a vestibule 130V that extends between the transfer deck 130B and the multilevel vertical conveyor 150. Each vestibule 130V may be configured with more than one charging/transfer station 290A, 290B (generally referred to herein as stations). Each of the stations 290A, 290B may be configured to charge an electricity storage device of the bot as well as serve as a transfer location for accessing a respective portion of the multilevel vertical conveyor shelf 250. The stations 290A, 290B may be arranged in, for example, a linear array, along guide line 130C2. It is noted that there may be any suitable number of stations having any suitable arrangement within the vestibule 130V. To allow the bots 110 access to each of the stations 290A, 290B the guide lines 130C1-130C3 of the vestibule 130V may be configured to allow bidirectional travel of the bots 110 (in combination with, for example, suitable bot traffic management).

In one example, general travel through the vestibule 130V may be such that the bots 110 enter the vestibule on guide line 130C3, travel through the vestibule along guide line 130C2 and exit the vestibule along guide line 130C1. The bot 110Y may be designated for transferring a case unit to the multilevel vertical conveyor 150 at station 290A. However, a bot 110X may be located at station 290B blocking access to the station 290A along the general direction of travel through the vestibule 130V. The bot 110Y may travel along guide line 130L1 in the direction of arrow 299 past vestibule guide line 130C1. The bot may turn onto the guide line 130C1 and enter the vestibule with the back end leading the direction of travel in a manner substantially similar to that described above with respect to bot 110M entering picking aisle 130A4. It is noted that in the embodiments the entrances/exits of the vestibule 130V may include guide members substantially similar to guide members 13500, 13501 described above with respect to Fig. 13 such that the guide members 13500, 13501 assist, for example, the line following of the bot. In alternate embodiments the entrances/exits of the vestibule 130V may lack guide members such that transition into the vestibule occurs through line following. Once on the guide line 130C1 the bot may travel and turn on to guide line 130C2 for arriving at station 290A so that a transfer of case unit 101 may be made between the bot 110Y and the multilevel vertical conveyor 150.

Similarly, if bot 110X completes the transfer of case unit 101 at station 290B while bot 110Y is located at station 290A the exit of the vestibule (as determined from the general flow of traffic through the vestibule described above) may be blocked. The bot 110X may travel with the back end 1501 leading the direction of travel so that the bot 110X exits the vestibule along guide line 130C3. It is noted that the vestibule, such as vestibule 130V may include multiple substantially parallel paths or guide lines 130C3, 130C4 through the vestibule where shunts 130S traverse the paths 130C3, 130C4. The bots 110 may use these parallel paths 130C3, 130C4 and shunts 130S to travel around bots located at one or more of the stations 290A, 290B for accessing a desired one of the (unoccupied) stations 290A, 290B.

In a first aspect of the disclosed embodiment an autonomous transport vehicle is provided. The autonomous transport vehicle includes a frame having a longitudinal axis extending from a front of the frame to a back of the frame, at least one first guide member mounted on one side of the frame and having a first guide member frame of reference, and at least one second guide member mounted to an opposite side of the frame than the at least one first guide member and having a second guide member frame of reference, wherein the first and second guide members are asymmetrically compliant guide members so that a stiffness of the at least one first guide member in response to a force in a predetermined direction relative to the first guide member frame of reference is different than a stiffness of the at least second guide member in response to the force in the predetermined direction relative to the second guide member frame of reference.

In accordance with a first sub-aspect of the disclosed embodiment, the at least one first guide member includes a first yoke pivotally mounted to the frame about a first pivot member and a first engagement member mounted to the first yoke, and the at least one second guide member includes a second yoke pivotally mounted to the frame about a second pivot member and a second engagement member mounted to the second yoke.

In accordance with the first sub-aspect of the first aspect of the disclosed embodiment, the first engagement member is longitudinally offset from the first pivot member.

In accordance with the first sub-aspect of the first disclosed embodiment, the second engagement member is transversely aligned with the second pivot member.

In accordance with the first aspect of the disclosed embodiment one or more of the at least one first and at least one second guide members comprise rotatable wheels.

In accordance with the first aspect of the disclosed embodiment, the at least one first guide member comprises two first guide members and the at least one second guide member comprises two second guide members, the two first guide members being located on a first side of the autonomous transport vehicle and the two second guide members being located on a second opposite side of the autonomous transport vehicle.

In accordance with the first aspect of the disclosed embodiment, the autonomous transport vehicle is configured for transporting item between the autonomous transport vehicle and storage shelves of a storage and retrieval system and the at least one second guide member is configured to maintain a predetermined transverse distance between the autonomous transport vehicle and the items stored on the storage shelves.

In accordance with a second sub-aspect of the first aspect of the disclosed embodiment, the at least one first and at least one second guide members are configured to interface with a first guide rail and a second guide rail of a storage and retrieval system where the first and second guide rails are located on opposite sides of the autonomous transport vehicle for guiding the autonomous transport vehicle along a substantially straight path.

In accordance with the second sub- aspect of the first aspect of the disclosed embodiment one of the at least one first and at least one second guide members is configured to engage one of the first and second guide rails such that another one of the at least one first and at least one second guide member is held against another one of the first and second guide rails.

In accordance with the second sub-aspect of the first aspect of the disclosed embodiment the at least one first and at least second guide members are configured to interface with a first and second contoured guide members extending from respective ones of the first and second guide rails where the first and second contoured guide members have opposing contours for directing a respective one of the at least first guide member and the at least second guide member into engagement with a respective one of the first and second guide rails.

In accordance with a third sub-aspect of the first aspect of the disclosed embodiment, the autonomous transport vehicle is configured to travel along at least picking aisles of a storage and retrieval system and the at least one first guide member and the at least one second guide member are configured such that the autonomous transport vehicle can enter the picking aisles with the front of the autonomous transport vehicle leading or trailing a direction of travel of the autonomous transport vehicle.

In accordance with the third sub-aspect of the first aspect of the disclosed embodiment, the storage and retrieval system further includes a conveyor interface section, the at least one first guide member and the at least one second guide member are configured such that the autonomous transport vehicle can enter the conveyor interface section with the front of the autonomous transport vehicle leading or trailing a direction of travel of the autonomous transport vehicle.

In accordance with a second aspect of the disclosed embodiment, an automated transport vehicle is provided for transporting items in a storage and retrieval system where the storage and retrieval system includes picking aisles adjacent item storage locations. The automated transport vehicle includes a frame having a front end, a back end and a longitudinal axis extending between the front and back ends. A pair of first guide members are located on a first side of the frame where one of the first guide members is located adjacent the front end and the other of the first guide members is located adjacent the back end, each guide member of the pair of first guide members having a first guide member frame of reference. A pair of second guide members are located on a second side of the frame, opposite the first side, where one of the second guide members is located adjacent the front end and the other of the second guide members is located adjacent the back end, each guide member of the pair of second guide members having a second guide member frame of reference. The pair of first guide members and the pair of second guide members are asymmetrically compliant so that a stiffness of each one of the pair of first guide members in response to a force in a predetermined direction relative to a respective first guide member frame of reference is different than a stiffness of each one of the pair of second guide members in response to the force in the predetermined direction relative to a respective second guide member frame of reference.

In accordance with the second aspect of the disclosed embodiment each guide member of the pair of first guide members are configured to pivot relative to the frame when a resultant force applied to the guide wheel is at an angle relative to the longitudinal axis.

In accordance with the second aspect of the disclosed embodiment the pair of first guide members is configured to maintain the autonomous transport vehicle at a predetermined distance within the picking aisles from items in the storage locations.

In accordance with the second aspect of the disclosed embodiment, the pair of first guide members and the pair of second guide members are configured to allow the autonomous transport vehicle to traverse the picking aisle with either the front end or back end leading a direction of travel through the picking aisle.

In accordance with the second aspect of the disclosed embodiment, the storage and retrieval system further includes conveyor interface sections and the pair of first guide members and the pair of second guide members are configured to allow the autonomous transport vehicle to traverse the conveyor interface section with either the front end or back end leading a direction of travel through the conveyor interface section.

In accordance with a third aspect of the disclosed embodiment a storage and retrieval system is provided. The storage and retrieval system includes a transfer deck, picking aisles in communication with the transfer deck, and at least one autonomous transport vehicle configured to traverse the transfer deck and picking aisles. The at least one autonomous transport vehicle having a frame with a front end and a back end and a longitudinal axis extending between the front and back ends and at least one first guide member disposed on a first side of the frame and at least one second guide member disposed on a second opposite side of the frame where the at least one first guide member and the at least one second guide member are asymmetrically compliant so that a stiffness of the at least one first guide member in response to a force in a predetermined direction relative to the first guide member frame of reference is different than a stiffness of the at least second guide member in response to the force in the predetermined direction relative to the second guide member frame of reference.

In accordance with the third aspect of the disclosed embodiment, the at least one first guide member includes at least one first guide wheel and a first pivot member rotatably mounted to the frame and the at least one second guide member includes at least one second guide wheel and a second pivot member rotatably mounted to the frame, the at least one first guide wheel being rotatably mounted to the first pivot member where an axis of rotation of the first pivot member is located transversely in-line with a rotation axis of the at least one first guide wheel, and the at least one second guide wheel is rotatably mounted to the second pivot member where an axis of the second pivot member is longitudinally spaced from an axis of rotation of the at least one second guide wheel.

In accordance with the third aspect of the disclosed embodiment, the storage and retrieval system further includes conveyor interface sections having two transfer deck interfaces with the transfer deck configured for autonomous transport vehicle entry/exit to/from the conveyor interface sections and the autonomous transport vehicle is configured to one or more of enter/exit the two transfer deck interfaces with either of the front and back ends leading a direction of travel through the conveyor interface section and enter/exit and traverse the picking aisles with either of the front and back ends leading a direction of travel through the storage location picking aisles.

In a fourth aspect of the disclosed embodiment an autonomous transport robot for transporting a payload is provided. The autonomous transport robot includes a drive section assembly having at least one motor and a pair of drive wheels coupled to the motor, a frame configured to support a payload, a transfer arm connected to the frame and configured for an autonomous transfer of payload to and from the frame, and a suspension system movably connecting the drive section assembly and the frame allowing relative movement between the frame and the drive section assembly.

In accordance with the fourth aspect of the disclosed embodiment, the suspension lockout device is configured such that the suspension is free to move when the transfer arm is in a retracted position.

In accordance with the fourth aspect of the disclosed embodiment, the suspension is configured to maintain drive wheels of the drive section in substantial contact with a travel surface on which the autonomous transport vehicle is travelling.

In accordance with a first sub-aspect of the fourth aspect of the disclosed embodiment the suspension system includes a pivot member mounted to one of the frame and drive section and a pivot axle mounted to the other one of the frame and drive section, where the pivot axle and pivot member are configured to engage each other to form a pivot coupling between the frame and drive section.

In accordance with the first sub-aspect of the fourth aspect of the disclosed embodiment one or more guide members are connected to one of the frame and drive section, the guide members being configured to engage an interface surface of the other one of the frame and drive section and at least in part to substantially prevent relative yaw and pitch between the frame and drive section.

In accordance with a second sub-aspect of the fourth aspect of the disclosed embodiment the autonomous transport robot further includes a suspension lockout device connected to one or more of the frame and drive section. The suspension lockout device being configured to passively lock the suspension system as the transfer arm is extended from the frame where locking of the suspension system substantially prevents relative pivoting movement between the drive section and the frame.

In accordance with the second sub-aspect of the fourth aspect of the disclosed embodiment the lockout device includes an engagement member mounted to one of the frame and drive section, a locking device mounted to the other one of the frame and drive section and an actuation member configured to actuate the locking device causing the locking device to engage the engagement member.

In accordance with the second sub-aspect of the fourth aspect of the disclosed embodiment the lockout device includes a body and a lever member pivotally mounted to the body, wherein the engagement member extends between the body and lever member and the body and lever member are configured such that actuation of the locking device causes the engagement member to be clamped between the lever member and body.

In accordance with the second sub-aspect of the fourth aspect of the disclosed embodiment the lockout device includes a resilient member configured to move the lever member away from the engagement member for at least in part unlocking the suspension.

In accordance with the second sub-aspect of the fourth aspect of the disclosed embodiment the actuation member comprises a cam connected to a drive system of the transfer arm, wherein the cam is configured to be passively rotated during extension of the transfer arm.

In accordance with a fifth aspect of the disclosed embodiment a suspension lockout system for an autonomous transport vehicle is provided. The suspension lockout system includes an engagement member mounted to one of a frame and drive section assembly of the autonomous transport vehicle, where the frame is configured to support a payload and the drive section assembly includes at least one motor and a pair of drive wheels coupled to the motor, and a locking device mounted to another one of the frame and drive section assembly of the autonomous transport vehicle, wherein a suspension system of the autonomous transport vehicle connecting the frame to the drive section assembly is configured to allow pivotal movement between the frame and drive section assembly and the suspension lockout system is configured to release the suspension system for unrestricted movement between the frame and drive section assembly when the transfer arm is in a retracted position and to be automatically locked when the transfer arm is extended from the retracted position, and wherein locking of the suspension lockout system substantially prevents pivotal movement between the frame and drive section.

In accordance with a first sub-aspect of the fifth aspect of the disclosed embodiment the suspension lockout system the locking device includes a body and a lever member pivotally mounted to the body, wherein the engagement member extends between the body and lever member and the body and lever member are configured such that actuation of the locking device causes the engagement member to be clamped between the lever member and body.

In accordance with the first sub-aspect of the fifth aspect of the disclosed embodiment the suspension lockout system further includes a cam connected to the transport arm drive system, wherein the cam is configured to be passively rotated during extension of the transfer arm and to engage the lever member for causing clamping of the engagement member.

In accordance with the fifth aspect of the disclosed embodiment the locking device includes a resilient member configured to move the lever member away from the engagement member for at least in part unlocking the suspension.

In accordance with a sixth aspect of the disclosed embodiment a suspension system for an autonomous transport vehicle is provided. The suspension system includes an articulated coupling configured to allow rolling movement between a frame and a drive section assembly of the autonomous transport vehicle along a common longitudinal axis where the frame is configured to support a payload and the drive section assembly includes at least one motor and a pair of drive wheels coupled to the motor, and a suspension locking system configured to automatically substantially prevent the rolling movement when an extendable transfer arm is moved from a retracted position, where the extendable transfer arm is configured to move between the retracted position and an extended position relative to the frame.

In accordance with the sixth aspect of the disclosed embodiment the suspension locking system is configured to automatically release the articulated coupling to allow the rolling movement when the arm is moved to the retracted position.

In accordance with the sixth aspect of the disclosed embodiment the suspension system is configured to maintain drive wheels of the drive section assembly in substantially continuous contact with a travel surface on which the autonomous transport vehicle is travelling.

In accordance with the sixth aspect of the disclosed embodiment the suspension system further includes one or more guide members mounted to one of the frame and drive section assembly at an interface between the frame and guide section, the one or more guide members being configured to substantially prevent yaw and pitch motion between the frame and drive section.

In accordance with a first sub-aspect of the sixth aspect of the disclosed embodiment the suspension locking system includes an engagement member mounted to one of the frame and drive section assembly, a body mounted to another one of the frame and drive section and a lever member pivotally mounted to the body, wherein the engagement member extends between the body and lever member and the body and lever member are configured such that actuation of the suspension locking system causes the engagement member to be clamped between the lever member and body.

In accordance with the first sub-aspect of the sixth aspect of the disclosed embodiment the suspension locking system includes a resilient member configured to move the lever member away from the engagement member for at least in part unlocking the articulated coupling.

In accordance with the first sub-aspect of the sixth aspect of the disclosed embodiment the suspension locking system further includes a cam configured to engage the lever member for actuating the suspension locking system, wherein the cam is passively connected to a drive system of the extendable transfer arm.

In a seventh aspect of the disclosed embodiment an autonomous transport vehicle for transporting items in a storage and retrieval system is provided. The autonomous transport vehicle includes at least two drive wheels and a controller, where each drive wheel is independently driven and a drive wheel encoder is disposed adjacent each drive wheel. The controller, in communication with the encoders, is configured to determine a kinematic state of the autonomous transport vehicle within the storage and retrieval system based incremental data from the drive wheel encoders only and independent of drive wheel slippage.

In accordance with a first sub-aspect of the seventh aspect of the disclosed embodiment, the controller is configured to determine command logic for operating the autonomous transport vehicle based on the kinematic state.

In accordance with the first sub-aspect of the seventh aspect of the disclosed embodiment, the autonomous transport vehicle includes one or more of a wheel encoder for each drive wheel, an inertial sensor, at least one storage slat sensor and at least one line following sensor, wherein the controller is configured to receive data from the one or more of the wheel encoder for each drive wheel, the inertial sensor, the at least one storage slat sensor and the at least one line following sensor for determining the kinematic state.

In accordance with a second sub-aspect of the seventh aspect of the disclosed embodiment, the controller is further configured to determine a position of the autonomous transport vehicle within the storage and retrieval system independent of drive wheel slippage.

In accordance with the second sub-aspect of the seventh aspect of the disclosed embodiment, the controller is configured to determine the position of the autonomous transport vehicle based on a drive wheel having a lowest velocity of the at least two drive wheels when a positive torque is applied by the at least two drive wheels.

In accordance with the second sub-aspect of the seventh aspect of the disclosed embodiment, the controller is configured to determine the position of the autonomous transport vehicle based on a drive wheel having a highest velocity of the at least two drive wheels when a negative torque is applied by the at least two drive wheels.

In accordance with the second sub-aspect of the seventh aspect of the disclosed embodiment, the controller is configured with an extended Kalman filter for filtering spurious data from each of the encoders.

In accordance the second sub-aspect of the seventh aspect of the disclosed embodiment, the autonomous transport vehicle includes at least one line following sensor configured to sense guide lines on a surface of the storage and retrieval system, the controller being further configured to weight data from each of the encoders based on a guide line deviation signals provided by the at least one line following sensor.

In accordance the second sub-aspect of the seventh aspect of the disclosed embodiment, wherein the controller is configured to verify a position of the autonomous transport vehicle by detecting one or more datum lines on a surface of the storage and retrieval system.

In accordance with the seventh aspect of the disclosed embodiment, the autonomous transport vehicle includes at least one releasably lockable caster wheel.

In accordance with an eighth aspect of the disclosed embodiment, an autonomous transport vehicle for transporting items in a storage and retrieval system is provided. The autonomous transport vehicle includes a frame, a controller, at least two independently driven drive wheels mounted to the frame and at least one caster wheel mounted to the frame and having a releasably lockable swivel lock. The controller being configured to lock and unlock the releasably lockable swivel lock during a transport of items through the storage and retrieval system based on a predetermined kinematic state of the autonomous transport vehicle.

In accordance with the eighth aspect of the disclosed embodiment, the controller is configured to individually drive the independently driven drive wheels based on command logic generated from a determination of the predetermined kinematic state of the autonomous transport vehicle.

In accordance with the eighth aspect of the disclosed embodiment, the controller is configured to apply a differential torque to the independently driven drive wheels for effecting curvilinear travel of the autonomous transport vehicle.

In accordance with the eighth aspect of the disclosed embodiment, the controller is configured to maintain the at least one releasably lockable swivel lock in a locked state when a lateral position and yaw angle of the autonomous transport vehicle are below a predetermined deviation value.

In accordance with the eighth aspect of the disclosed embodiment, the controller is configured to unlock the releasably lockable swivel lock substantially during an application of differential torque to the independently driven drive wheels.

In accordance with a first sub-aspect of the eighth aspect of the disclosed embodiment, the at least one caster wheel includes an actuator, a first locking member and a second locking member connected to a wheel of the at least one releasably lockable caster wheel, the actuator being configured for a pulse release of the first locking member from the second locking member for unlocking the releasably lockable swivel lock.

In accordance with the first sub-aspect of the eighth aspect of the disclosed embodiment, the at least one caster wheel is configured such that the first locking member and second locking member are substantially aligned during substantially straight line travel of the autonomous transport vehicle and the first locking member is biased to automatically engage the second locking member for locking the swivel lock.

In accordance with the first sub-aspect of the eighth aspect of the disclosed embodiment, wherein the autonomous transport vehicle has a longitudinal axis substantially aligned with the straight line travel of the autonomous transport vehicle and a lateral axis that is transverse to the longitudinal axis, the first locking member being configured to engage the second locking member in a lateral direction.

In accordance with a ninth aspect of the disclosed embodiment, an autonomous transport vehicle is provided. The autonomous transport vehicle includes at least two independently driven drive wheels, at least one releasably lockable caster wheel and a controller. The controller includes a state estimator configured to estimate a kinematic state of the autonomous transport vehicle wherein the controller issues control commands to the at least two independently driven drive wheels and the at least one releasably lockable casters based on the estimated kinematic state of the autonomous transport vehicle.

In accordance with the ninth aspect of the disclosed embodiment, the controller is configured to estimate a state of the autonomous transport vehicle based on data obtained from one or more sensors of the autonomous transport vehicle.

In accordance with a tenth aspect of the disclosed of the embodiments an autonomous transport vehicle for transporting items in a storage and retrieval system is provided. The autonomous transport vehicle includes a controller, at least one wheel encoder in communication with the controller and at least one line following sensor in communication with the controller and configured to detect guide lines disposed on a deck of the storage and retrieval system. The controller being configured to estimate a position of the autonomous transport vehicle within the storage and retrieval system using an extended Kalman filter and sensor data from the at least one wheel encoder. The controller is further configured to update the extended Kalman filter using sensor data from the at least one line following sensor so that an accuracy of the estimated position of the autonomous transport vehicle increases over previous estimated position determinations.

In accordance with an eleventh aspect of the disclosed of the embodiments an autonomous transport vehicle for transporting items in a storage and retrieval system is provided. The autonomous transport vehicle including a controller, a frame, at least two driven wheels mounted to the frame and a wheel encoder for each of the driven wheels in communication with the controller and configured to detect rotation of a respective driven wheel. The controller being configured to determine a position of the autonomous transport vehicle within the storage and retrieval system from sensor data from an encoder for a driven wheel having the best wheel odometry of the at least two driven wheels.

In accordance with a twelfth aspect of the disclosed embodiment a storage and retrieval system is provided. The storage and retrieval system includes storage locations, at least one picking aisle configured to provide access to each of the storage locations, a transfer deck configured to allow substantially mechanically unconstrained travel of at least one autonomous transport vehicle on the transfer deck, and a vehicle guide system configured to at least guide a transition of the at least one autonomous transport vehicle from substantially mechanically unconstrained travel on the transfer deck to substantially mechanically constrained travel within the at least one picking aisle.

In accordance with the a first sub-aspect of the twelfth aspect of the disclosed embodiment, the vehicle guide system includes at least one curved restraint disposed on at least one side of each of the at least one picking aisle at a junction between the transfer deck and a respective picking aisles, where the at least one curved restraint is configured to interface with guiding members of the autonomous transport vehicle for guiding the autonomous transport vehicle into the picking aisle.

In accordance with first sub-aspect of the twelfth aspect of the disclosed embodiment, the vehicle guide system further includes at least one substantially linear guide member disposed on at least one side of each picking aisle where the at least one substantially linear guide member substantially extends from a respective one of the at least one curved restraint.

In accordance with the first sub-aspect of the twelfth aspect of the disclosed embodiment, the at least one curved restraint includes a pair of converging restraints disposed on opposite sides of the respective picking aisle where the pair of converging constraints converges towards an entrance of the picking aisle. The vehicle guide system further includes a pair of substantially linear guide member disposed on opposite sides of respective picking aisle where each substantially linear guide member extends from a respective one of the converging restraints.

It should be understood that the exemplary embodiments disclosed herein can be used individually or in any suitable combination thereof. It should also be understood that the foregoing description is only illustrative of the embodiments. Various alternatives and modifications can be devised by those skilled in the art without departing from the embodiments. Accordingly, the present embodiments are intended to embrace all such alternatives, modifications and variances that fall within the scope of the appended claims.

**Claims**

1. An autonomous transport vehicle for transporting items in a storage and retrieval system, the autonomous transport vehicle comprising:

   a frame;
   a controller;
   at least two independently driven drive wheels mounted to the frame; and
   at least one caster wheel mounted to the frame and having a releasably lockable swivel lock, the controller being configured to lock and unlock the releasably lockable swivel lock during a transport of items through the storage and retrieval system based on a predetermined kinematic state of the autonomous transport vehicle.

2. The autonomous transport vehicle of claim 1, wherein the controller is configured to individually drive the independently driven drive wheels based on command logic generated from a determination of the predetermined kinematic state of the autonomous transport vehicle.

3. The autonomous transport vehicle of claim 1, wherein the controller is configured to apply a differential torque to the independently driven drive wheels for effecting curvilinear travel of the autonomous transport vehicle.

4. The autonomous transport vehicle of claim 1, wherein the controller is configured to maintain the at least one releasably lockable swivel lock in a locked state when a lateral position and yaw angle of the autonomous transport vehicle are below a predetermined deviation value.

5. The autonomous transport vehicle of claim 1, wherein the controller is configured to unlock the releasably lockable swivel lock substantially during an application of differential torque to the independently driven drive wheels.

6. The autonomous transport vehicle of claim 1, wherein the at least one caster wheel includes an actuator, a first locking member and a second locking member connected to a wheel of the at least one releasably lockable caster wheel, the actuator being configured for a pulse release of the first locking member from the second locking member for unlocking the releasably lockable swivel lock.

7. The autonomous transport vehicle of claim 6, wherein the at least one caster wheel is configured such that the first locking member and second locking member are substantially aligned during substantially straight line travel of the autonomous transport vehicle and the first locking member is biased to automatically engage the second locking member for locking the releasably lockable swivel lock.

8. The autonomous transport vehicle of claim 6, wherein the autonomous transport vehicle has a longitudinal axis substantially aligned with the straight line travel of the autonomous transport vehicle and a lateral axis that is transverse to the longitudinal axis, the first locking member being configured to engage the second locking member in a lateral direction.

9. An autonomous transport vehicle for transporting items in a storage and retrieval system, the autonomous transport vehicle comprising:

   a controller;
   at least one wheel encoder in communication with the controller; and
   at least one line following sensor in communication with the controller and configured to detect guide lines disposed on a deck of the storage and retrieval system;
   wherein the controller being configured to estimate a position of the autonomous transport vehicle within the storage and retrieval system using an extended Kalman filter and sensor data from the at least one wheel encoder, the controller is further configured to update the extended Kalman filter using sensor data from the at least one line following sensor so that an accuracy of the estimated position of the autonomous transport vehicle increases over previous estimated position determinations.

10. An autonomous transport vehicle for transporting items in a storage and retrieval system, the autonomous transport vehicle comprising:

    at least two drive wheels, each drive wheel being independently driven;
    a drive wheel encoder disposed adjacent each drive wheel; and
    a controller in communication with the encoders configured to identify a kinematic state of the autonomous transport vehicle within the storage and retrieval system based only on incremental data from the drive wheel encoders, received from each encoder, and independent of drive wheel slippage.

11. The autonomous transport vehicle of claim 10, wherein the controller is configured to determine command logic for operating the autonomous transport vehicle based on the kinematic state.

12. The autonomous transport vehicle of claim 10, wherein the autonomous transport vehicle includes one or more of a wheel encoder for each drive wheel, an inertial sensor, at least one storage slat sensor and at least one line following sensor, wherein the controller is configured to receive data from the one or more of the wheel encoder for each drive wheel, the inertial sensor, the at least one storage slat sensor and the at least one line following sensor for identifying the kinematic state.

13. The autonomous transport vehicle of claim 10, wherein the controller is further configured to determine a position of the autonomous transport vehicle within the storage and retrieval system independent of drive wheel slippage.

14. The autonomous transport vehicle of claim 13, wherein the controller is configured to determine the position of the autonomous transport vehicle based on a drive wheel having a lowest velocity of the at least two drive wheels when a positive torque is applied by the at least two drive wheels.

15. The autonomous transport vehicle of claim 13, wherein the controller is configured to determine the position of the autonomous transport vehicle based on a drive wheel having a highest velocity of the at least two drive wheels when a negative torque is applied by the at least two drive wheels.

16. The autonomous transport vehicle of claim 13, wherein the controller is configured with an extended Kalman filter for filtering spurious data from each of the encoders.

17. The autonomous transport vehicle of claim 13, wherein the autonomous transport vehicle includes at least one line following sensor configured to sense guide lines on a surface of the storage and retrieval system, the controller being further configured to weight data from each of the encoders based on a guide line deviation signals provided by the at least one line following sensor.

18. The autonomous transport vehicle of claim 13, wherein the controller is configured to verify a position of the autonomous transport vehicle by detecting one or more datum lines on a surface of the storage and retrieval system.

19. The autonomous transport vehicle of claim 10, wherein the autonomous transport vehicle includes at least one releasably lockable caster wheel.

20. An autonomous transport vehicle comprising:

    at least two independently driven drive wheels;

at least one releasably lockable caster wheel; and

a controller including a state estimator configured to estimate a kinematic state of the autonomous transport vehicle wherein the controller issues control commands to the at least two independently driven drive wheels and the at least one releasably lockable caster wheel based on the estimated kinematic state of the autonomous transport vehicle.

21. The autonomous transport vehicle of claim 20, wherein the controller is configured to estimate a state of the autonomous transport vehicle based on data obtained from one or more sensors of the autonomous transport vehicle.

FIG.1

FIG.2

FIG.3

FIG.4A

FIG.4B

FIG.4C

EP 4 116 231 A1

**FIG.4D**

FIG.4E

FIG.5B

FIG.5C

FIG.5A

FIG.5E

FIG.5D

FIG.6

EP 4 116 231 A1

```
┌────────────────────────┐
│ RECEIVE WHEEL ENCODER  │──16000
│         DATA           │
└────────────────────────┘
            │
            ▼
┌────────────────────────┐
│  RECEIVE LINE SENSOR   │──16001
│         DATA           │
└────────────────────────┘
            │
            ▼
┌────────────────────────┐
│   DETERMINE ERROR      │──16002
└────────────────────────┘
            │
            ▼
┌────────────────────────┐
│    UPDATE MODEL        │──16003
└────────────────────────┘
```

FIG.6A

```
┌────────────────────────┐
│  RECEIVE SENSOR DATA   │──18000
└────────────────────────┘
            │
            ▼
┌────────────────────────┐
│ DETERMINE LONGITUDINAL │──18001
│  POSITION AND SPEED    │
└────────────────────────┘
            │
            ▼
┌────────────────────────┐
│  DETERMINE LATERAL     │──18002
│ POSITION, SPEED AND YAW│
└────────────────────────┘
            │
            ▼
┌────────────────────────┐
│  ESTIMATE OR UPDATE    │──18003
│     KINEMATICS         │
└────────────────────────┘
```

FIG.6C

DETECT CUIDE LINES — 17000

RECEIVE LINE SENSOR DATA — 17001

INDIVIDUALLY DRIVE MOTORS TO STEER BOT — 17002

DETECT DATUM — 17003

RESET WHEEL ENCODER DATA — 17004

ESTIMATE BOT POSITION — 17005

COMPARE ESTIMATED POSITION WITH PREDETERMINED LOCATION OF DATUM — 17006

ESTIMATE BOT POSITION USING WHEEL ENCODER DATA — 17008

UPDATE BOT POSITION — 17007

FIG.6B

FIG.7

EP 4 116 231 A1

FIG.8

FIG.9A

FIG.9B

FIG.10B

FIG.10A

798    799

751,
(ARM EXTENDED
POSITION)

10603A

751,
(ARM RETRACTED
POSITION)

10603B

10603

10611

750

10603E

10610

10601

751

10603B
10603A

10603

10610

**FIG.10C**

**FIG.10D**

770

BOT ARM
DRIVE SYSTEM

1530D

1530R

751

750

560B

560G

110DS

110F

FIG.11A

FIG.11B

352

12403    12405

12402

R1

12404

Y1

R2

12400    12401

110FR

## FIG.12A

351

12454    R4    12451

R3    12450

12455

12453    12452

## FIG.12B

PICKING
AISLE, 130A

TRANSFER
DECK, 130B

FIG.13

**FIG.14A**

**FIG.14B**

FIG.15

FIG.16A

FIG.16B

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

EP 22 16 9954

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/118412 A1 (CASEPICK SYSTEMS LLC [US]; LERT JOHN [US]; SULLIVAN ROBERT [US]; TOEBE) 14 October 2010 (2010-10-14) * claim 1 * * figures 14A-14C, 17 * * paragraph [00085] – paragraph [00086] * * paragraph [000115] * | 1-6 | INV. B65G1/04 B60B33/02 B62D11/02 |
| X | JP H02 296505 A (TOKYU CAR CORP) 7 December 1990 (1990-12-07) * claim 1 * * figures 1-9 * * page 35 – page 38 * | 1-8 | |
| X | JP H11 171010 A (NISSAN MOTOR) 29 June 1999 (1999-06-29) * claim 1 * * figures 1-4 * * paragraph [0001] – paragraph [0028] * | 1-7 | |

| | |
|---|---|
| | TECHNICAL FIELDS SEARCHED (IPC) |
| | B65G B60P B62D B60B |

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

**see sheet C**

| Place of search | Date of completion of the search | Examiner |
|---|---|---|
| The Hague | 28 November 2022 | Thibaut, Charles |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04E07)

**Application Number**

EP 22 16 9954

Claim(s) completely searchable:
        1-8

Claim(s) not searched:
        9-21

Reason for the limitation of the search:

Claims 1, 9, 10 and 20 have been drafted as separate independent claims. Under Article 84 in combination with Rule 43(2) EPC, an application may contain more than one independent claim in a particular category only if the subject-matter claimed falls within one or more of the exceptional situations set out in paragraph (a), (b) or (c) of Rule 43(2) EPC. This is not the case in the present application.
The applicant has been invited to indicate the claims complying with Ruler 43(2) EPC, on the basis of which the search is to be carried out. In his reply dated 24-10-2022, the applicant provided an amended set of claims, without providing a clear indication of the claims as originally filed which comply with Rule 43(2) EPC. It should be noted that the applicant may not amend the description, claims or drawings of a European patent application before receiving the European search report (Rule 137(1) EPC). The applicant thus failed to supply the requested indication in due time, and the search report has been drawn up on the basis of the first independent claim of each category (Rule 62a(1) EPC): independent claim 1 and dependent claims 2-8.

## ANNEX TO THE EUROPEAN SEARCH REPORT
## ON EUROPEAN PATENT APPLICATION NO.

EP 22 16 9954

28-11-2022

| Patent document cited in search report | | Publication date | Patent family member(s) | | Publication date |
|---|---|---|---|---|---|
| WO 2010118412 | A1 | 14-10-2010 | CN | 102725213 A | 10-10-2012 |
| | | | CN | 106064734 A | 02-11-2016 |
| | | | EP | 2417044 A1 | 15-02-2012 |
| | | | EP | 2436618 A2 | 04-04-2012 |
| | | | EP | 2436619 A2 | 04-04-2012 |
| | | | EP | 2436620 A2 | 04-04-2012 |
| | | | EP | 4049952 A1 | 31-08-2022 |
| | | | JP | 5756062 B2 | 29-07-2015 |
| | | | JP | 5756086 B2 | 29-07-2015 |
| | | | JP | 6232398 B2 | 15-11-2017 |
| | | | JP | 6373229 B2 | 15-08-2018 |
| | | | JP | 6471311 B2 | 20-02-2019 |
| | | | JP | 6535632 B2 | 26-06-2019 |
| | | | JP | 6655671 B2 | 26-02-2020 |
| | | | JP | 6771448 B2 | 21-10-2020 |
| | | | JP | 6871303 B2 | 12-05-2021 |
| | | | JP | 2012211019 A | 01-11-2012 |
| | | | JP | 2012211020 A | 01-11-2012 |
| | | | JP | 2012523358 A | 04-10-2012 |
| | | | JP | 2015157712 A | 03-09-2015 |
| | | | JP | 2015166286 A | 24-09-2015 |
| | | | JP | 2016155690 A | 01-09-2016 |
| | | | JP | 2018027860 A | 22-02-2018 |
| | | | JP | 2018158846 A | 11-10-2018 |
| | | | JP | 2019178009 A | 17-10-2019 |
| | | | JP | 2020040838 A | 19-03-2020 |
| | | | JP | 2021113130 A | 05-08-2021 |
| | | | KR | 20120013979 A | 15-02-2012 |
| | | | KR | 20170019497 A | 21-02-2017 |
| | | | KR | 20190053288 A | 17-05-2019 |
| | | | KR | 20200120767 A | 21-10-2020 |
| | | | KR | 20210133318 A | 05-11-2021 |
| | | | TW | 201102331 A | 16-01-2011 |
| | | | TW | 201643089 A | 16-12-2016 |
| | | | TW | 201825366 A | 16-07-2018 |
| | | | US | 2010316468 A1 | 16-12-2010 |
| | | | US | 2010316469 A1 | 16-12-2010 |
| | | | US | 2010316470 A1 | 16-12-2010 |
| | | | US | 2010322746 A1 | 23-12-2010 |
| | | | US | 2010322747 A1 | 23-12-2010 |
| | | | US | 2014088758 A1 | 27-03-2014 |
| | | | US | 2014271063 A1 | 18-09-2014 |
| | | | US | 2015266672 A1 | 24-09-2015 |
| | | | US | 2016185526 A1 | 30-06-2016 |
| | | | US | 2017362032 A1 | 21-12-2017 |
| | | | US | 2018016098 A1 | 18-01-2018 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 22 16 9954

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2022

| Patent document cited in search report | Publication date | Patent family member(s) | | Publication date |
|---|---|---|---|---|
| | | US 2018334325 A1 | | 22-11-2018 |
| | | US 2019218034 A1 | | 18-07-2019 |
| | | US 2020039744 A1 | | 06-02-2020 |
| | | US 2020172336 A1 | | 04-06-2020 |
| | | US 2020346866 A1 | | 05-11-2020 |
| | | US 2022002083 A1 | | 06-01-2022 |
| | | US 2022177226 A1 | | 09-06-2022 |
| | | WO 2010118412 A1 | | 14-10-2010 |
| JP H02296505 A | 07-12-1990 | NONE | | |
| JP H11171010 A | 29-06-1999 | JP 3511617 B2 | | 29-03-2004 |
| | | JP H11171010 A | | 29-06-1999 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 32642311
- US 61423409
- US 32644711
- US 61423359
- US 32650511
- US 61423317
- US 75722010
- US 75738110
- US 61423340 B
- US 32667411
- US 75735410
- US 757220
- US 75731210
- US 61423220 B
- US 32704011
- US 61423365 B
- US DECEMBER152010 A
- US 32695211
- US 61423388 B
- US 32699311
- US 61423359 B
- US 61423206 B
- US 32703511
- US 61423402 B
- US 32682311
- US 75733710
- US 25733710
- US 757312
- US 12757381 B
- US 12757220 B
- US 12757 A
- US 312 A